(19) Europäisches Patentamt
European Patent Office
Office européen des brevets

(11) **EP 3 982 102 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(51) Internationale Patentklassifikation (IPC):
**G01M 11/02** (2006.01)  **G02C 13/00** (2006.01)
**G02C 7/06** (2006.01)

(21) Anmeldenummer: **21209645.7**

(22) Anmeldetag: **22.04.2020**

(52) Gemeinsame Patentklassifikation (CPC):
**G01M 11/0228; G02C 13/005;** G02C 7/063

(54) **VERFAHREN UND VORRICHTUNG ZUM VERMESSEN DER LOKALEN BRECHKRAFT UND/ODER DER BRECHKRAFTVERTEILUNG EINES BRILLENGLASES**

METHOD AND DEVICE FOR MEASURING THE LOCAL REFRACTIVE POWER AND/OR REFRACTIVE POWER DISTRIBUTION OF A SPECTACLE LENS

PROCÉDÉ ET DISPOSITIF POUR MESURER LA PUISSANCE OPTIQUE LOCALE ET/OU LA RÉPARTITION DE PUISSANCE OPTIQUE D'UN VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2019 EP 19170715**

(43) Veröffentlichungstag der Anmeldung:
**13.04.2022 Patentblatt 2022/15**

(62) Dokumentnummer(n) der früheren Anmeldung(en) nach Art. 76 EPÜ:
**20723300.8 / 3 959 497**

(73) Patentinhaber: **Carl Zeiss Vision International GmbH**
**73430 Aalen (DE)**

(72) Erfinder: **GLASENAPP, Carsten**
**73447 Oberkochen (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
EP-A1- 2 608 109   WO-A1-2016/076530
WO-A1-2016/207412   WO-A1-2017/134275
US-A1- 2015 362 998   US-B1- 10 019 140

- **KIRIAKOS N KUTULAKOS ET AL: "A Theory of Refractive and Specular 3D Shape by Light-Path Triangulation", INTERNATIONAL JOURNAL OF COMPUTER VISION, KLUWER ACADEMIC PUBLISHERS, BO, vol. 76, no. 1, 11 July 2007 (2007-07-11), pages 13 - 29, XP019557768, ISSN: 1573-1405, DOI: 10.1007/S11263-007-0049-9**
- **CHARI VISESH ET AL: "A Theory of Refractive Photo-Light-Path Triangulation", 2017 IEEE CONFERENCE ON COMPUTER VISION AND PATTERN RECOGNITION (CVPR), IEEE COMPUTER SOCIETY, US, 23 June 2013 (2013-06-23), pages 1438 - 1445, XP032492941, ISSN: 1063-6919, [retrieved on 20131002], DOI: 10.1109/CVPR.2013.189**
- **HAN KAI ET AL: "Dense Reconstruction of Transparent Objects by Altering Incident Light Paths Through Refraction", INTERNATIONAL JOURNAL OF COMPUTER VISION, KLUWER ACADEMIC PUBLISHERS, NORWELL, US, vol. 126, no. 5, 30 September 2017 (2017-09-30), pages 460 - 475, XP036454203, ISSN: 0920-5691, [retrieved on 20170930], DOI: 10.1007/S11263-017-1045-3**

EP 3 982 102 B1

**Beschreibung**

Die Erfindung betrifft ein Verfahren zum Vermessen der lokalen Brechkraft und/oder der Brechkraftverteilung eines linken und/oder eines rechten Brillenglases, vorzugsweise in einer Brillenfassung. Darüber hinaus betrifft die Erfindung ein Computerprogrammprodukt mit einem Computerprogramm mit Programmcode sowie eine Vorrichtung zur Durchführung des Verfahrens.

Um einem Brillenträger das scharfe Sehen zu ermöglichen, müssen die Brillengläser in der Brillenfassung zu den Augen des Brillenträgers korrekt positioniert und ausgerichtet werden. Das korrekte Ausrichten und Positionieren ist grundsätzlich bei allen Brillengläsern erforderlich. Besondere Bedeutung hat das korrekte Ausrichten und Positionieren der Brillengläser insbesondere bei individualisierten optischen Brillenglasdesigns, bei torischen Brillenglasdesigns, bei Brillengläsern mit hoher dioptrischer Wirkung und bei Gleitsicht-Brillengläsern. Gleitsicht-Brillengläser ermöglichen Brillenträgern das scharfe Sehen in unterschiedlichen Gebrauchssituationen, z. B. in unterschiedlichen Entfernungen, nur durch Verändern der Blickrichtung, ohne dass es dabei eines größeren Akkommodationserfolges der Augen bedarf. Gleitsicht-Brillengläser sind gemäß DIN EN ISO 13666:2013-10, Absatz 8.3.5 Brillengläser mit mindestens einer Gleitsichtfläche und einer zunehmenden (positiven) dioptrischen Wirkung, wenn der Brillenträger nach unten blickt. Individualisierte Brillengläser und/oder Gleitsicht-Brillengläser haben einen oder mehrere Bezugspunkte, z. B. einen Fern-Durchblickpunkt und/oder einen Nah-Durchblickpunkt, deren Lage je nach Gebrauchssituation an den Ort der Pupillen der Augen eines Brillenträgers angepasst werden muss. Der Fern-Durchblickpunkt ist gemäß DIN EN ISO 13666:2013-10, Absatz 5.16, die angenommene Lage des Durchblickpunkts auf einem Brillenglas für das Sehen in die Ferne unter bestimmten Bedingungen. Der Nah-Durchblickpunkt ist gemäß DIN EN ISO 13666:2013-10, Absatz 5.17, die angenommene Lage des Durchblickpunkts auf einem Brillenglas für das Sehen in die Nähe unter bestimmten Bedingungen. Bei torischen Brillenglasdesigns besteht außerdem die Notwendigkeit der für einen Brillenträger richtigen Orientierung ihrer zylindrischen Wirkung.

Aus der WO 2016/207412 A1 ist ein Verfahren und eine Vorrichtung der eingangs genannten Art bekannt. Dort ist das Vermessen der lokalen Brechkraft eines linken und/oder eines rechten Brillenglases in einer Brillenfassung mit einer Messvorrichtung beschrieben, in der die Brillenfassung angeordnet wird. Diese Messvorrichtung enthält eine Bilderfassungseinrichtung und ein Display für das Anzeigen einer Teststruktur, dessen Lage relativ zu der Bilderfassungseinrichtung bekannt ist. Mittels der Bilderfassungseinrichtung wird die an dem Display zur Anzeige gebrachte Teststruktur mit einem Abbildungsstrahlengang erfasst, der das linke und/oder das rechte Brillenglas in der Brillenfassung durchsetzt. Zusätzlich wird mittels des Displays ein Abschnitt der Brillenfassung erfasst, der ein Koordinatensystem der Brillenfassung definiert. In einer Rechnereinheit wird dann mittels Bildverarbeitung aus dem erfassten Abschnitt der Brillenfassung und der erfassten Abbildung der Teststruktur sowie aus den Koordinaten der Teststruktur und der erfassten Abbildung der Teststruktur in einem zu dem Koordinatensystem der Brillenfassung referenzierten Koordinatensystem die lokale Brechkraft eines linken und/oder rechten Brillenglases bestimmt.

Die EP 2 608 109 A1 offenbart ein Verfahren zur Ermittlung einer Brechkraft eines Brillenglases in Trageposition. Dabei wird eine Aufnahme des Brillenträgers ohne Brillenfassung und eine Aufnahme des Brillenträgers mit Brillenfassung erfasst und in beiden Aufnahmen die Größe der Iris ermittelt. Aus dem Größenunterschied und der Brennweite der Kamera wird auf die Brechkraft des Brillenglases geschlossen. Für dieses Verfahren ist es notwendig, dass die Brille vom Brillenträger getragen wird. Zudem ermöglicht dieses Verfahren keine lokale Bestimmung der Brechkraft an einzelnen Punkten auf dem Brillenglas sowie die Bestimmung der einzelnen Strahlengänge durch das Brillenglas.

Die US 2015/0362998 A1 und die US 10,019,140 B1 beschreiben jeweils Verfahren zur Feststellung des Abstands des Gesichts einer Person von einer dieses Gesicht erfassenden Bilderfassungseinrichtung mittels Photogrammetrie.

Aus der WO 2016/076530 A1 ist ein Verfahren zur Messung der Brechkraft einer Brille bekannt, bei dem aus dem Größenunterschied eines Objekts zwischen einer Aufnahme ohne Brillenglas und einer Aufnahme durch das Brillenglas auf die Brechkraft der Linse geschlossen wird.

Die WO 2017/134275 A1 beschreibt das Vermessen der globalen Brechkraft eines linken und/oder eines rechten Brillenglases in einer Brillenfassung, indem wenigstens ein Bild eines linken und/oder rechten Brillenglases in einer Brillenfassung ausgewertet wird, das vor einem Hintergrund erfasst ist, dessen Geometrie entweder bekannt oder abgeschätzt ist. Zusätzlich wird wenigstens ein Bild des Hintergrunds ohne die Brillenfassung aufgenommen. Aus den Bildern wird lediglich eine globale Brechkraft der Linsenvorder- und -rückfläche bestimmt, aber keine lokale Brechkraft an unterschiedlichen Orten der Linse oder eine Brechkraftverteilung.

Die US 2015/0029323 A1 beschreibt eine Bildverarbeitungsvorrichtung mit einem Speicher und mit einem mit dem Speicher gekoppelten Prozessor, der dazu dient, die optische Eigenschaft einer Brille durch Auswerten von Bildern des Brillenträgers zu bestimmen, die mittels einer Bilderfassungseinrichtung erfasst sind und die den Brillenträger mit und ohne Brille zeigen. In der US 2015/0029323 A1 ist angegeben, anhand der räumlichen Lage einer durch eine Brille mit Brillengläsern hindurch erfasste Gesichtskontur des Gesichts eines Brillenträgers und der räumlichen Lage einer erfassten Gesichtskontur dieses Gesichts Brille auf die Brechkraft eines Brillenglases in der Brille zu schließen.

Aufgabe der Erfindung ist es, auf einfache Weise und ohne großen apparativen Aufwand die fokussierende oder die dioptrische Wirkung eines linken und/oder eines rechten Brillenglases jeweils für die Ferne und/oder für die Nähe zu bestimmen. Insbesondere ist es eine Aufgabe der Erfindung, eine lokale Brechkraft an unterschiedlichen Stellen auf einem Brillenglas, d. h. eine Brechkraftverteilung, mit einer hohen Genauigkeit zu ermitteln.

Diese Aufgabe wird durch das in Anspruch 1 und Anspruch 2 angegebene Verfahren gelöst. Vorteilhafte Weiterbildungen der Erfindung sind in den abhängigen Ansprüchen angegeben.

Bei dem in Anspruch 1 angegebenen Verfahren zum Vermessen der lokalen Brechkraft eines linken und/oder eines rechten Brillenglases in einer Brillenfassung wird in einem ersten Schritt mittels wenigstens einer Bilderfassungseinrichtung wenigstens eine erste Abbildung einer Szene aus wenigstens einer ersten Aufnahmeposition erfasst, wobei diese wenigstens eine erste Abbildung viele Strukturpunkte aufweist und ein linkes und/oder ein rechtes Brillenglas in einer Brillenfassung enthält, wobei der wenigstens eine Abbildungsstrahlengang für jeden dieser Strukturpunkte das erste oder das zweite Brillenglas der Brillenfassung durchsetzt.

Unter Brechkraft versteht diese Erfindung die fokussierende Wirkung oder die dioptrische Wirkung eines Brillenglases. Unter der fokussierenden Wirkung versteht diese Erfindung entsprechend der in DIN EN ISO 13666:2013-10, Absatz 9.2, angegebenen Definition den Sammelbegriff für die sphärische und astigmatische Wirkung eines Brillenglases. Unter der dioptrischen Wirkung eines Brillenglases versteht diese Erfindung entsprechend der in DIN EN ISO 13666:2013-10, Absatz 9.3, angegebenen Definition den Sammelbegriff für die fokussierende und die prismatische Wirkung des Brillenglases. Unter der prismatischen Wirkung eines Brillenglases versteht diese Erfindung entsprechend der in DIN EN ISO 13666:2013-10, Absatz 10.9, angegebenen Definition den Sammelbegriff für prismatische Ablenkung und Basislage.

Unter lokaler Brechkraft versteht diese Erfindung die lokale fokussierende Wirkung oder die lokale dioptrische Wirkung eines Brillenglases.

Unter Brechkraftverteilung versteht diese Erfindung die ortsaufgelöste fokussierende Wirkung oder die ortsaufgelöste dioptrische Wirkung eines Brillenglases.

Unter einer Szene versteht die Erfindung einen Abschnitt einer Umgebung, der mit wenigstens einer Bilderfassungseinrichtung, z. B. mit wenigstens einer digitalen Kamera erfasst werden kann, die beispielsweise in ein Smartphone oder in einen Tablet-Computer integriert ist. Eine Szene kann z. B. ein Abschnitt eines Zimmers in einer Wohnung oder ein Abschnitt eines Ladenlokals oder ein Teil einer Landschaft sein. Eine Szene kann allerdings auch ein Gesicht oder nur ein linkes Auge und/oder ein rechtes Auge eines Brillenträgers der Brille enthalten.

Unter wenigstens einem Strukturpunkt einer Szene wird vorliegend ein geometrischer Punkt verstanden, dessen Bild in wenigstens einer Abbildung oder Aufnahme der Szene durch Erfassen der Szene mit wenigstens einer Bilderfassungseinrichtung aufgrund einer zu dem Bild dieses Punkts unterschiedlichen Helligkeit und/oder Farbe eines Bilds von zu diesem Punkt benachbarten Punkten eindeutig zu erkennen ist. Ein Strukturpunkt kann z. B. an einer Ecke oder Kante einer Struktur in der Szene liegen.

Von dem Begriff Strukturpunkt einer Szene ist vorliegend allerdings auch ein Punkt in einem ortsfesten, zeitinvarianten Muster erfasst, z. B. wenigstens ein Punkt in einem regelmäßigen oder unregelmäßigen Punktemuster, wenigstens ein Punkt in einem regelmäßigen oder unregelmäßigen Streifenmuster, wenigstens ein Punkt in einem regelmäßigen oder unregelmäßigen Karomuster, wenigstens ein Punkt in einem Barcode, wenigstens ein Punkt in einem 2D-Code und/oder wenigstens ein Punkt innerhalb eines geschriebenen Textes, beispielsweise einer Zeitung oder eines Buches oder eines elektronischen Anzeigegerätes, z.B. eines Bildschirms, sein. Insbesondere kann wenigstens ein ortsfester, zeitinvarianter Strukturpunkt in einer Szene wenigstens ein Punkt auf einer strukturierten Oberfläche, beispielsweise einer strukturierten Tischdecke oder auf einer strukturierten Tapete sein.

Unter dem Begriff Strukturpunkt einer Szene wird vorliegend allerdings auch wenigstens ein Punkt in einer Szene verstanden, dessen Lage sich zeitlich verändern kann, wie z. B. wenigstens ein Punkt in dem Gesicht eines Brillenträgers, das sich bewegt, etwa ein Punkt auf Augenbrauen, auf Lippen oder ein auf der Iris liegender Punkt. Wenn sich die Lage des wenigstens einen Strukturpunktes in einer Szene zeitlich verändert, wird bevorzugt, soweit möglich, dessen Verschiebung rekonstruiert und dann bei der Bestimmung der lokalen Brechkraft eines linken und/oder rechten Brillenglases berücksichtigt. Für den Fall, dass die Verschiebung eines solchen Strukturpunkts nicht rekonstruierbar ist, ist es von Vorteil, wenn dieser Strukturpunkt bei einer Bestimmung der lokalen Brechkraft und/oder der Brechkraftverteilung eines linken und/oder rechten Brillenglases nicht berücksichtigt wird.

Unter wenigstens einer Bilderfassungseinrichtung versteht die Erfindung bevorzugt eine digitale Kamera, welche z. B. in einem mobilen Endgerät, wie einem Mobiltelefon, einem Smartphone oder einem Tablet-Computer integriert ist. Die digitale Kamera kann als eine Stereokamera, als eine Multikamera, als ein Bildsensor mit einem Objektiv oder als ein Bildsensor mit wenigstens zwei Objektiven und/oder als eine sogenannte plenoptische Kamera ausgebildet sein. Zu bemerken ist, dass ein stehend angegebenes mobiles Endgerät auch mehrere Bilderfassungseinrichtungen in Form einer digitalen Kamera aufweisen kann.

Unter einem mobilen Endgerät ist insbesondere eine Vorrichtung zu verstehen, welche zumindest einen programmierbaren Prozessor sowie wenigstens eine Bilderfassungseinrichtung, z.B. wenigstens eine Kamera, und wenigstens einen Beschleunigungssensor umfasst, und welche bevorzugt dazu ausgelegt ist, getragen zu werden, d.h. hinsichtlich Dimensionen und Gewicht derart ausgestaltet ist, dass sie von einer Person mitführbar ist. In dem mobilen Endgerät können weitere Komponenten vorhanden sein, wie zum Beispiel wenigstens ein Bildschirm, wenigstens eine Lichtquelle für beispielsweise sichtbares Licht aus einem Wellenlängenbereich von 380 nm bis 780 nm und/oder infrarotes Licht aus einem Wellenlängenbereich von 780 nm bis 1 mm und/oder wenigstens ein Lichtempfänger mit einer Sensibilität für beispielsweise sichtbares Licht aus einem Wellenlängenbereich von 380 nm bis 780 nm und/oder infrarotes Licht aus einem Wellenlängenbereich von >780 nm bis 1 mm. Typische Beispiele für derartige mobile Endgeräte sind Smartphones oder Tablet-PCs, die wenigstens einen Bildschirm, beispielsweise einen Sensorbildschirm (Touchscreen), wenigstens eine Bilderfassungseinrichtung, z.B. wenigstens eine Kamera, wenigstens einen Beschleunigungssensor, wenigstens eine Lichtquelle, wenigstens einen Lichtempfänger und weitere Komponenten, wie drahtlosen Schnittstellen für Mobilfunk oder WLAN (Wireless LAN) aufweisen können.

Unter einem Abbildungsstrahlengang für einen Strukturpunkt wird vorliegend der Verlauf der Lichtstrahlen verstanden, die eine optische Abbildung des Strukturpunkts aus der Szene als ein Strukturpunktbild in die Abbildung der Szene in wenigstens einer Bilderfassungseinrichtung bewirken. Als der Hauptstrahl des Abbildungsstrahlengangs für einen Strukturpunkt wird im Folgenden dessen eine Symmetrieachse bildende optische Achse bezeichnet.

Bei dem in Anspruch 1 angegebenen Verfahren werden in einem weiteren Schritt, der zeitlich vor oder nach dem ersten Schritt liegen oder gleichzeitig mit dem ersten erfolgen kann, wenigstens zwei weitere Abbildungen der Szene ohne das erste und/oder das zweite Brillenglas der Brillenfassung oder ohne die Brillenfassung enthaltend das erste und/oder das zweite Brillenglas mit den in der ersten Abbildung abgebildeten Strukturpunkten mittels wenigstens einer Bilderfassungseinrichtung aus wenigstens zwei verschiedenen Aufnahmepositionen erfasst, wobei wenigstens eine der Aufnahmepositionen identisch zu der wenigstens einen ersten Aufnahmeposition sein kann. Die wenigstens eine Bilderfassungseinrichtung kann in dem weiteren Schritt identisch oder verschieden zu der wenigstens einen Bilderfassungseinrichtung aus dem ersten Schritt sein. Bevorzugt ist die wenigstens eine Bilderfassungseinrichtung in dem weiteren Schritt identisch zu der wenigstens einen Bilderfassungseinrichtung aus dem ersten Schritt. Darauf werden in einem Schritt des Berechnens die Koordinaten der Strukturpunkte in einem Koordinatensystem aus den wenigstens zwei weiteren Abbildungen der Szene mittels Bildauswertung mittels Triangulation bestimmt. Im Anschluss daran wird die lokale Brechkraft in einem Schritt des Bestimmens einer lokalen Brechkraft für wenigstens einen Abschnitt des linken Brillenglases und/oder einen Abschnitt des rechten Brillenglases aus den Koordinaten der Strukturpunkte und dem Bild der Strukturpunkte in der wenigstens einen ersten Abbildung der Szene mittels eines inversen Ansatzes bestimmt, bei dem aus den Abbildungsstrahlengängen für die Strukturpunkte die optischen Grenzflächen des linken und/oder rechten Brillenglases berechnet werden, indem durch Variation der jeweils zu bestimmenden Grenzfläche eine Fehlergröße minimiert wird, wobei die Fehlergröße zu der Grenzfläche bestimmt wird, indem mittels Ray-Tracing ein Vergleich von Strahlpunkten vor und hinter der Grenzfläche erstellt wird.

Das in Anspruch 2 angegebene Verfahren zum Vermessen der lokalen Brechkraft eines linken und/oder eines rechten Brillenglases in einer Brillenfassung sieht vor, in einem ersten Schritt mittels wenigstens einer Bilderfassungseinrichtung wenigstens eine erste Abbildung einer Szene aus wenigstens einer ersten Aufnahmeposition zu erfassen, wobei diese wenigstens eine erste Abbildung viele Strukturpunkte aufweist und ein linkes und/oder ein rechtes Brillenglas in einer Brillenfassung enthält, wobei der wenigstens eine Abbildungsstrahlengang für jeden dieser Strukturpunkte das erste oder das zweite Brillenglas der Brillenfassung durchsetzt.

Wie oben angegeben wird vorliegend unter dem Abbildungsstrahlengang für einen Strukturpunkt der Verlauf der Lichtstrahlen verstanden, die eine optische Abbildung des Strukturpunkts aus der Szene als ein Strukturpunktbild in die mittels wenigstens einer Bilderfassungseinrichtung erfasste Abbildung der Szene bewirken. Als der Hauptstrahl des Abbildungsstrahlengangs für einen Strukturpunkt wird im Folgenden dessen eine Symmetrieachse bildende optische Achse bezeichnet.

In einem weiteren Schritt, der zeitlich vor oder nach dem ersten Schritt liegen kann oder der gleichzeitig mit dem ersten Schritt erfolgen kann, werden wenigstens zwei weitere Abbildungen der Szene mit dem linken und/oder dem rechten Brillenglas in einer Brillenfassung mittels wenigstens einer Bilderfassungseinrichtung aus wenigstens zwei unterschiedlichen von der ersten Aufnahmeposition verschiedenen weiteren Aufnahmepositionen mit jeweils wenigstens einem Abbildungsstrahlengang für die in der ersten Abbildung abgebildeten Strukturpunkte erfasst, wobei dieser wenigstens eine Abbildungsstrahlengang das erste und das zweite Brillenglas der Brillenfassung nicht durchsetzt. Darauf werden in einem weiteren Schritt die Koordinaten der Strukturpunkte in einem Koordinatensystem aus dem jeweiligen wenigstens einen Strahlengang der Strukturpunkte, welche das linke und rechte Brillenglas nicht durchsetzt haben, mittels Bildauswertung mittels Triangulation berechnet. Anschließend wird die lokale Brechkraft für wenigstens einen Abschnitt des linken Brillenglases und/oder für wenigstens einen Abschnitt des rechten Brillenglases jeweils aus den Koordinaten der Strukturpunkte und dem Bild der Strukturpunkte in der wenigstens einen ersten Abbildung der Szene mittels eines inversen Ansatzes bestimmt, bei dem aus den Abbildungsstrahlengängen für die Strukturpunkte die optischen Grenzflächen des linken und/oder rechten Brillenglases berechnet werden, indem durch Variation der jeweils zu bestimmenden Grenzfläche eine Fehlergröße minimiert wird, wobei die Fehlergröße zu der Grenzfläche bestimmt wird, indem mittels Ray-Tracing ein Vergleich von Strahlpunkten vor und hinter der Grenzfläche erstellt wird..

In einer vorteilhaften Weiterbildung eines vorstehend angegebenen Verfahrens zum Vermessen der lokalen Brechkraft eines linken und/oder eines rechten Brillenglases, vorzugsweise in einer Brillenfassung, werden eine Vielzahl von Strukturpunkten in einer Szene aus jeweils wenigstens einer ersten Aufnahmeposition in jeweils einer ersten Abbildung der Szene erfasst und es werden die auf das Erfassen folgenden Schritte anhand dieser jeweiligen Vielzahl von Strukturpunkten vorgenommen.

Unter einer Vielzahl von Strukturpunkten wird vorliegend eine aus mindestens drei Strukturpunkten bestehende Punktemenge verstanden. Von Vorteil ist es, wenn das Vermessen der lokalen Brechkraft eines linken und/oder eines rechten Brillenglases anhand von wenigstens 10, bevorzugt wenigstens 100, besonders bevorzugt wenigstens 1000 und ganz besonders bevorzugt wenigstens 10000 Strukturpunkten erfolgt. Günstig ist, wenn das Vermessen der lokalen Brechkraft eines linken und/oder rechten Brillenglases anhand einer Anzahl Z von Strukturpunkten erfolgt, für die gilt: $100 \leq Z \leq 1000$.

Indem die lokale Brechkraft an einer Vielzahl von unterschiedlichen Stellen des linken und/oder rechten Brillenglases vermessen wird, ist es möglich, für das linke und/oder rechte Brillenglas eine Brechkraftverteilung zu bestimmen.

Die Bildauswertung jeder Abbildung umfasst bevorzugt bildverarbeitende Technologien, wie beispielsweise Klassifizierung, Segmentierung und Triangulation. Mit Hilfe von Verfahren zur Objekterkennung, wie Segmentierung und Klassifizierung, wird jede Abbildung bevorzugt nach Objekten der Klassen Szene und/oder Brillenfassung untersucht. Die Verfahren zur Objekterkennung können sowohl klassischer Natur, wie z.B. Thresholding, kanten- oder regionsbasierte Segmentierung, optischer Fluss als auch lernender Natur sein. Sind die Verfahren zur Objekterkennung lernender Natur, wie bei der Anwendung von lernenden Algorithmen, ist es notwendig, im Vorfeld ein neuronales Netzwerk mit augmentierten Trainingsdaten zu trainieren. Das Ergebnis jedes dieser Verfahren zur Objekterkennung ist die Position, Lage und Begrenzung der Objekte, hier der Klassen Szene und/oder Brillenfassung. Eine zusätzliche Information ist die Existenz der jeweiligen Objekte in den jeweiligen Abbildungen. Es kann beispielsweise auf diese Weise erkannt werden, ob eine Brillenfassung und/oder ein Brillenglas in der Abbildung vorhanden ist oder nicht. Somit kann die Zuordnung, ob es sich um eine erste oder um eine weitere Abbildung handelt, auch nach deren jeweiliger Aufnahme erfolgen. Die Zuordnung, ob es sich um eine erste oder um eine zweite Abbildung handelt, kann weiterhin in Unkenntnis, ob es sich um eine erste oder um eine weitere Abbildung gehandelt hat, erfolgen.

Bei den vorstehend angegebenen Verfahren können die Strukturpunkte jeweils nur ortsfest oder jeweils sowohl ortsfest als auch zeitinvariant sein. Alternativ kann die Verschiebung des wenigstens einen Strukturpunkts jeweils bekannt und/oder deren Verschiebung rekonstruierbar sein und bei der Bestimmung der Brechkraftverteilung berücksichtigt werden. Bevorzugt sind die Strukturpunkte jeweils ortsfest, besonders bevorzugt jeweils ortsfest und zeitinvariant.

Aus der in einem der vorstehend beschriebenen Verfahren bestimmten Brechkraftverteilung eines linken und/oder eines rechten Brillenglases oder wenigstens eines Abschnitts eines linken und/oder rechten Brillenglases kann auf die lokale Brechkraft an einer bestimmten Stelle des Brillenglases zurückgeschlossen werden.

Bei den vorstehend angegebenen Verfahren kann in dem jeweils ersten Schritt, in welchem mittels wenigstens einer Bilderfassungseinrichtung wenigstens eine erste Abbildung einer Szene aus wenigstens einer ersten Aufnahmeposition erfasst wird, optional der Rand oder die Randkurve des linken und/oder rechten Brillenglases in einer Brillenfassung erfasst werden.

Bevorzugt ist die Randkurve die in der dem Gesicht abgewandten Vorderfläche der Brillenfassung liegende formbestimmende Begrenzung des Brillenglases, die bei Halbrand- oder Vollrandbrillen teilweise oder ganz mit dem vorderseitig liegenden, inneren Rand der Brillenfassung zusammenfällt. Bei Vollrandbrillen ist in der dem Gesicht abgewandten Vorderfläche der Brillenfassung die Randkurve gleich dem vorderseitig liegenden Glasaußenrand oder dem vorderseitig liegenden Fassungsinnenrand. Bei Halbrandbrillen ist in der dem Gesicht abgewandten Vorderfläche der Brillenfassung die Randkurve gleich dem vorderseitig liegenden Glasaußenrand oder dem vorderseitig liegenden Fassungsinnenrand, soweit eine durch die Fassung gegebene Struktur gegeben ist. Soweit bei Halbrandbrillen keine durch die Fassung gegebene Struktur gegeben ist, ist in der dem Gesicht abgewandten Vorderfläche der Brillenfassung die Randkurve gleich dem vorderseitig liegenden Glasaußenrand. Bei rahmenlosen Brillen gibt es keine analoge Struktur der Fassung, d.h. der Begriff Randkurve bezeichnet hier in der dem Gesicht abgewandten Vorderfläche der Brillenfassung immer den vorderseitig liegenden Glasaußenrand.

Wenn bei dem in Anspruch 1 angegebenen Verfahren eine in einem mobilen Endgerät angeordnete Bilderfassungseinrichtung eingesetzt wird, die wenigstens zwei digitale Kameras, eine Stereokamera, eine Multikamera, ein Kamerachip mit wenigstens zwei Objektiven oder eine plenoptische Kamera enthält, kann es ausreichend sein, eine einzige Abbildung der Szene mit der Brillenfassung enthaltend das erste und/oder das zweite Brillenglas, wobei diese eine erste Abbildung wenigstens einen Strukturpunkt aufweist, zu erfassen, und eine einzige weitere Abbildung der Szene ohne die Brillenfassung enthaltend das erste und/oder das zweite Brillenglas mit denselben Strukturpunkten der ersten Abbildung einer Szene zu erfassen. Zur Erhöhung der Genauigkeit des Verfahrens gemäß Anspruch 1 werden bevorzugt wenigstens zwei Abbildungen der Szene mit der Brillenfassung enthaltend das erste und/oder das zweite Brillenglas und wenigstens zwei Abbildungen der Szene ohne die Brillenfassung enthaltend das erste und/oder das zweite Brillenglas erfasst.

Wenn bei dem in Anspruch 2 angegebenen Verfahren eine in einem mobilen Endgerät angeordnete Bilderfassungseinrichtung eingesetzt wird, die wenigstens zwei digitale Kameras, eine Stereokamera, eine Multikamera, ein Kamerachip mit wenigstens zwei Objektiven oder eine plenoptische Kamera enthält, kann es ausreichend sein, eine einzige Abbildung der Szene mit der Brillenfassung enthaltend das erste und/oder das zweite Brillenglas zu erfassen, wobei diese eine erste Abbildung wenigstens einen Strukturpunkt aufweist, wobei der wenigstens eine Abbildungsstrahlengang für jeden dieser Strukturpunkte das erste und/oder das zweite Brillenglas durchsetzt, und eine einzige weitere Abbildung der Szene mit der Brillenfassung enthaltend das erste und/oder das zweite Brillenglas, zu erfassen, wobei diese wenigstens eine weitere Abbildung aus einer von der ersten Aufnahmeposition verschiedenen Aufnahmeposition aufgenommen wird, so dass der wenigstens eine Abbildungsstrahlengang für jeden dieser Strukturpunkte das erste und das zweite Brillenglas der Brillenfassung nicht durchsetzt. Auch bei dieser Ausführungsform des Verfahrens gemäß Anspruch 2 werden zur Erhöhung von dessen Genauigkeit bevorzugt wenigstens zwei erste Abbildungen mit der Brillenfassung und wenigstens zwei weitere Abbildungen der Szene mit der Brillenfassung aus von den ersten beiden Aufnahmepositionen verschiedenen Aufnahmepositionen erstellt.

Für das Vermessen von Brillengläsern mit einer stark negativen Brechkraft, d. h. mit einem Hauptschnitt mit einer negativen Brechkraft kleiner oder gleich -3 dpt ist es von Vorteil, wenn die Szene für das Bestimmen der lokalen Brechkraft und/oder der Brechkraftverteilung eines linken und/oder rechten Brillenglases, jeweils bevorzugt in einer Brillenfassung, wenigstens einen Strukturpunkt, bevorzugt wenigstens einen ortsfesten, zeitinvarianten Strukturpunkt, enthält, der durch ein linkes und/oder rechtes Brillenglas hindurch erfasst wird und der einen Abstand von dem jeweils zu vermessenden Brillenglas hat, der bevorzugt zwischen 5 mm und 200 mm beträgt.

Unter dem Abstand eines Strukturpunkts von einem Brillenglas wird hierbei jeweils die Entfernung des Strukturpunkts zu dem Durchstoßpunkt des Hauptstrahls des Abbildungsstrahlengangs auf der dem Strukturpunkt zugewandten Seite des Brillenglases verstanden. Zu bemerken ist, dass durch das Erfassen von weiteren Abbildungen der Szene aus weiteren, unterschiedlichen Aufnahmepositionen heraus, es grundsätzlich möglich ist, für einen jeden Strukturpunkt in dem vorstehend angegebenen Abstandsbereich den Hauptstrahl für eine optische Abbildung in die Bilderfassungseinrichtung anzugeben.

Für das Vermessen von Brillengläsern mit einer stark positiven Brechkraft, d. h. mit einem Hauptschnitt mit einer positiven Brechkraft größer oder gleich +3 dpt ist es von Vorteil, wenn die Szene für das Bestimmen der lokalen Brechkraft und/oder der Brechkraftverteilung eines linken und/oder rechten Brillenglases, jeweils bevorzugt in einer Brillenfassung, wenigstens einen Strukturpunkt, bevorzugt wenigstens einen ortsfesten, zeitinvarianten Strukturpunkt, enthält, der durch ein linkes und/oder rechtes Brillenglas hindurch erfasst wird und der einen Abstand von dem jeweils zu vermessenden Brillenglas hat, der bevorzugt vor dem Brennpunkt des stärkeren Hauptschnitts liegt. Dieser Abstand beträgt vorzugweise zwischen 5 mm und 100 mm.

Für das Vermessen von Brillengläsern, deren Brechkraft gering ist, d. h., mit einem Hauptschnitt mit einer negativen Brechkraft kleiner -3 dpt oder mit einem Hauptschnitt mit einer positiven Brechkraft größer +3 dpt werden gute Messergebnisse bei Szenen mit wenigstens einem Strukturpunkt, bevorzugt wenigstens einen ortsfesten, zeitinvarianten Strukturpunkt, erzielt, dessen Abstand von dem jeweils zu vermessenden Brillenglas, bevorzugt in einer Brillenfassung, bis zu 600 mm beträgt, bevorzugt in einem Bereich von 5 mm bis 500 mm.

Eine Erkenntnis der Erfindung ist insbesondere, dass sich die lokale Brechkraft und/oder Brechkraftverteilung eines Brillenglases mit dem erfindungsgemäßen Verfahren sehr genau bestimmen lässt, wenn der Abstand von wenigstens einem Strukturpunkt, bevorzugt wenigstens einem ortsfesten, zeitinvarianten Strukturpunkt, in einer Szene von einem Brillenglas in einer Brillenfassung zwischen 10 mm und 50 mm, bevorzugt zwischen 30 mm und 40 mm, beträgt.

Eine vorteilhafte Ausführungsform der Erfindung sieht vor, dass eine Vielzahl erster Abbildungen der Szene und eine Vielzahl weiterer Abbildungen der Szene erfasst werden, jeweils inklusive des Brillenglases, dessen lokale Brechkraft und/oder Brechkraftverteilung ermittelt werden soll, wobei sich dieses Brillenglas bevorzugt in einer Brillenfassung befindet. Alternativ kann bei Aufnahme der Vielzahl weiterer Abbildungen auch die Brillenfassung aus der Szene entfernt werden. Für das Erfassen einer Vielzahl erster Abbildungen der Szene und einer Vielzahl weiterer Abbildungen der Szene ist es von Vorteil, wenn diese wenigstens einen Teil einer Hemisphäre oder eine Hemisphäre jeweils um die Szene aufspannen und/oder eine Vielzahl von unterschiedlichen Aufnahmepositionen mit verschiedenen Aufnahmerichtungen und/oder Aufnahmeabständen abdecken. Die Koordinaten des wenigstens einen Strukturpunkts können dann nämlich aus der Vielzahl weiterer Abbildungen der Szene berechnet werden.

Eine entsprechend große Anzahl erfasster erster Abbildungen der Szene und erfasster weiterer Abbildungen der Szene erhöhen die Genauigkeit des Verfahrens zum Vermessen der lokalen Brechkraft und/oder der Brechkraftverteilung eines linken und/oder eines rechten Brillenglases, vorzugsweise in einer Brillenfassung.

Indem mittels der Bilderfassungseinrichtung eine Vielzahl von Abbildungen der Szene, insbesondere des Kopfes, unter Verlagerung der wenigstens einen Bilderfassungseinrichtung oder bei ortsfester Bilderfassungseinrichtung unter Drehung der Szene, insbesondere des Kopfes, erfasst werden, wobei das linke Auge und/oder das rechte Auge des Brillenträgers der Brillenfassung zu der verlagerten Bilderfassungseinrichtung blickt und aus der Vielzahl von dabei erfassten Abbildungen der Szene, insbesondere des Kopfes, Durchblickstrahlengänge für verschiedene Durchblickrichtungen des linken Auges und/oder rechten Auges des Brillenträgers der Brillenfassung durch das linke Brillenglas und/oder das rechte Brillenglas berechnet werden und für eine jede Durchblickrichtung eine lokale Brechkraft k(x, y) des linken Brillenglases und/oder des rechten Brillenglases bestimmt wird, ist es möglich, zu einer von einem Brillenträger gewählten Blickrichtung die lokale Brechkraft der Brillengläser in der von dem Brillenträger getragenen Brillenfassung zu bestimmen.

Die Vermessung der lokale Brechkraft und/oder der Brechkraftverteilung eines linken und eines rechten Brillenglases in einer Brillenfassung erlaubt insbesondere Aussagen über sogenannte binokulare Wirkungen einer Brille, d. h. einer Brillenfassung inklusive beider Brillengläser. Unter einer binokularen Wirkung ist die Beurteilung der fokussierenden oder dioptrischen Wirkung des linken und rechten Brillenglases für eine bestimmte Blickrichtung zu verstehen. Eine binokulare Wirkung kann auch Abbildungsfehler des Brillenglases, die höherer Ordnung sind, wie z. B. Koma, oder auch prismatische Fehler, umfassen.

Die Vermessung der lokalen Brechkraft und/oder der Brechkraftverteilung eines linken und eines rechten Brillenglases in einer Brillenfassung ermöglicht zu erkennen, ob bei einer bestimmten Blickrichtung, z. B. die astigmatische Wirkung umfassend die Differenz der Brechkraft in den Hauptschnitten und deren Richtung, des Brillenglases signifikant von den binokularen Zielwerten abweicht. Unter den binokularen Zielwerten ist hierbei die subjektiv ermittelte Refraktion, umfassend Sphäre, Zylinder mit Achse sowie Prisma mit Basislage, beider Augen zu verstehen. Für den Brillenträger ist eine Abweichung von den binokularen Zielwerten nicht oder nur wenig bemerkbar, wenn z. B. die Abweichung der astigmatischen Wirkung des linken und rechten Brillenglases von den binokularen Zielwerten gleich ist. Für den Brillenträger ist diese Abweichung von den binokularen Zielwerten jedoch deutlich bemerkbar, wenn die Abweichung der astigmatischen Wirkung des linken und rechten Brillenglases von den binokularen Zielwerten verschieden ist.

Zu bemerken ist, dass eine nicht korrekte prismatische Wirkung zwischen dem rechten und linken Brillenglas von einem Brillenträger als sehr unangenehm empfunden wird. Dabei wird eine nicht korrekte nasale prismatische Wirkung von einem Brillenträger eher akzeptiert als eine nicht korrekte temporale prismatische Wirkung und/oder eine nicht korrekte höhenprismatische Wirkung.

Das vorstehend angegebene Verfahren bietet insbesondere den Vorteil, dass durch ein gleichzeitiges Vermessen eines rechten und eines linken Brillenglases in einer Brillenfassung die Abweichung der prismatischen Wirkung des linken Brillenglases und des rechten Brillenglases von einem binokularen Zielwert in einer Tragesituation bestimmt werden kann.

Eine vorteilhafte Ausführungsform der Erfindung sieht vor, dass die Koordinaten der Strukturpunkte durch Auswerten von Verschiebungen der Abbildungen der Strukturpunkte in der Szene in den Aufnahmen aus unterschiedlichen Aufnahmepositionen in einem Koordinatensystem berechnet werden. Dabei können Verfahren zur Merkmalsdetektion, sogenannte "Feature-Detection-Verfahren" zur Anwendung kommen, z. B. gradientenbasierte Merkmalsdeskriptoren wie SIFT und SURF features oder binäre Merkmalsdeskriptoren wie BRIEF oder BRISK features.

Die Koordinaten der Strukturpunkte können auf ein beliebiges festes Koordinatensystem bezogen sein, insbesondere auf ein während einer Aufnahmeposition durch die wenigstens eine Bilderfassungseinrichtung festgelegtes Koordinatensystem. Vorzugsweise ist dieses Koordinatensystem zu dem Koordinatensystem der Brillenfassung referenziert, das durch einen Abschnitt der Brillenfassung definiert sein kann. Unter zwei zueinander referenzierten Koordinatensystemen werden dabei Koordinatensysteme verstanden, zu denen bekannt ist, wie die Koordinaten eines Punktes oder Vektors aus einem Koordinatensystem in dem anderen Koordinatensystem lauten. Insbesondere durch die Bestimmung von Abständen zwischen den Koordinaten der Strukturpunkte lässt sich erreichen, dass auch anhand von Szenen mit zeitlichen Änderungen, wie z. B. das Gesicht eines Brillenträgers, die lokale Brechkraft und/oder die Brechkraftverteilung eines linken und/oder rechten Brillenglases in einer Brillenfassung bestimmt werden kann.

Bei einer weiteren vorteilhaften Ausführungsform der Erfindung ist vorgesehen, dass durch Auswerten von Nachbarschaftsbeziehungen zwischen den Strukturpunkten in der Szene eine Verlagerung von wenigstens einem Strukturpunkt in einem Koordinatensystem erkannt und die Koordinaten von wenigstens einem in einer Szene verlagerten Strukturpunkt bei dem Bestimmen der lokalen Brechkraft und/oder Brechkraftverteilung für wenigstens einen Abschnitt des rechten Brillenglases und/oder des linken Brillenglases in dem Koordinatensystem der Brillenfassung nicht berücksichtigt wird. Auf diese Weise lässt sich erreichen, dass Bewegungen von Strukturpunkten in einer Szene keinen Einfluss auf das Messergebnis für die lokale Brechkraft und/oder Brechkraftverteilung eines linken und/oder rechten Brillenglases in einer Brillenfassung haben und das Messergebnis nicht verfälschen.

Die Erfindung beruht insbesondere auf dem Gedanken, dass das Aufnehmen einer Vielzahl von Abbildungen einer Szene, insbesondere das Aufnehmen einer Film- bzw. Videosequenz einer Szene, mit wenigstens einer Bilderfassungseinrichtung aus unterschiedlichen Aufnahmepositionen und/oder Aufnahmerichtungen heraus das Berechnen sogenannter intrinsischer Parameter der wenigstens einen Bilderfassungseinrichtung sowie deren räumlicher Lage in Bezug auf die Szene mittels Bildverarbeitung z. B. unter Verwendung von SLAM-Algorithmen, d. h. Algorithmen für das gleichzeitige Lokalisieren und Abbilden (Simultaneous Localization and Mapping), ermöglicht, wenn die Szene charakteristische Strukturmerkmale mit wenigstens einem Strukturpunkt enthält. Von Vorteil ist hier, wenn die Szene charakteristische Strukturmerkmale mit einer Vielzahl eindeutig definierter, bevorzugt ortsfester, zeitinvarianter Strukturpunkte enthält. Solche charakteristischen Strukturmerkmale können z. B. Helligkeitsverläufe auf Gegenständen mit beispielsweise einem Schnittpunkt zweier Kantenlinien, charakteristische Farben von Gegenständen oder auch charakteristische geometrische Formen von Gegenständen sein.

Unter intrinsischen Parametern einer Bilderfassungseinrichtung versteht die Erfindung vorliegend die Brennweite f einer Kamera in der Bilderfassungseinrichtung, die Koordinaten des Bildzentrums $Z_x$ und $Z_y$, den Scherungsparameter s sowie die Skalierungsparameter $m_x$ und $m_y$ aufgrund unterschiedlich skalierter Koordinatenachsen der Bildebene. Diese Parameter werden in einem Kamerakalibrierungsoperator

$$\bar{K} = \begin{pmatrix} f \cdot m_x & s & Z_x \cdot m_x \\ 0 & f \cdot m_y & Z_y \cdot m_y \\ 0 & 0 & 1 \end{pmatrix}$$

zusammengefasst. Im Rahmen der Erfindung können intrinsische Parameter einer Kamera auch Verzerrungsparameter sein, die zur Bestimmung von Bildverzerrungen, insbesondere der radialen und tangentialen Verzerrung, dienen. Die intrinsischen Parameter einer Bilderfassungseinrichtung beschreiben, wie eine 3D-Koordinate eines Objektpunkts in eine Bildebene der Bilderfassungseirichtung abgebildet wird bzw. wie aus einem gegebenen Punkt auf der Bildebene der zugehörige Strahlengang in einem zu der Bilderfassungseinrichtung ortsfesten Koordinatensystem berechnet werden kann.

Die Lage einer Bilderfassungseinrichtung bezüglich eines Koordinatensystems im Raum wird durch einen Rotationsoperator

$$\bar{R} = \begin{pmatrix} R_{11} & R_{12} & R_{13} \\ R_{21} & R_{22} & R_{23} \\ R_{31} & R_{32} & R_{33} \end{pmatrix}$$

mit

$$det\ \bar{R} = 1,$$

der die Rotation der Kamera um das Zentrum des Koordinatensystems festlegt, und einen Translationsvektor

$$\vec{T} = \begin{pmatrix} t_1 \\ t_2 \\ t_3 \end{pmatrix},$$

der die Verschiebung des Kamerazentrums relativ zu dem Ursprung des Koordinatensystems festlegt, beschrieben. Eine Koordinate c in diesem Koordinatensystem wird durch die Abbildungsvorschrift

$$f(c) = \bar{K} \cdot (\bar{R} \cdot c + \bar{T})$$

und der Berechnung der zugehörigen zwei-dimensionalen inhomogenen Koordinaten mittels Division des Ergebnisvektors durch seine dritte Koordinate auf die entsprechenden 2D-Koordinaten auf der Bildebene der Kamera abgebildet.

Umgekehrt kann zu einer zweidimensionalen Pixelkoordinate y in homogenen Koordinaten auf der Bildebene der Kamera anhand der Abbildungsvorschrift

$$g(y) = \bar{R}^T \cdot (\bar{K}^{-1} \cdot y - \bar{T})$$

der zugehörige Lichtstrahl bestimmt werden, der auf diese Koordinate abgebildet wird.

Aus der Vielzahl von Abbildungen einer Szene werden dann die Information eines 3D-Modells der Szene ohne die Brillenfassung, die Information der Position und der Lage der Brillenfassung in der Szene sowie die Information der Position der wenigstens einen Bilderfassungseinrichtung in der Szene zu einem jeden einzelnen aufgenommenen Bild, d. h. für einen jeden Zeitpunkt einer Aufnahme bestimmt. Daraus werden dann Strahlengänge durch die Brillengläser ermittelt, um aus diesen dann die lokale Brechkraft und/oder Brechkraftverteilung des linken und/oder rechten Brillenglases zu berechnen.

Eine vorteilhafte Weiterbildung der Erfindung sieht deshalb vor, dass für das Berechnen der Koordinaten des wenigstens einen Strukturpunkts ein SLAM-Algorithmus verwendet wird. Auf diese Weise kann die Genauigkeit der Berechnung der Koordinaten und der Positionen der Bilderfassungseinrichtungen erhöht sowie ein Rechenaufwand für das Bestimmen der Koordinaten von wenigstens einem Strukturpunkt in einer Szene minimiert und damit die hierfür erforderliche Rechenzeit gering gehalten werden.

Ein SLAM-Algorithmus ermöglicht insbesondere, aus Abbildungen ein- und derselben Szene, die aus verschiedenen Aufnahmepositionen erfasst sind und die deshalb die Szene aus unterschiedlichen Perspektiven zeigen, sowohl eine dreidimensionale Geometrie der Szene als auch die Positionen der wenigstens einen Bilderfassungseinrichtung zu berechnen, die diese beim Erfassen von Abbildungen der Szene jeweils eingenommen hat. Ein SLAM-Algorithmus umfasst eine Merkmalserkennungsroutine, die in der Szene vorhandene Merkmale detektiert, und eine Abgleichsroutine (Matching-Routine), mittels der für jedes Merkmal in einer Aufnahme das korrespondierende Merkmal in den aus unterschiedlichen Aufnahmepositionen aufgenommenen Bildern wiedererkannt wird. Aus den korrespondierenden Positionen jedes Merkmals in den Bildaufnahmen wird dann anhand der intrinsischen Parameter der wenigstens einen Bilderfassungseinrichtung und der zu den Aufnahmen gehörenden Positionen der Bilderfassungseinrichtungen im Raum ein dreidimensionales Modell der Szene erstellt.

Ein erfindungsgemäßes Computerprogrammprodukt enthält ein Computerprogramm mit Programmcode zur Durchführung der vorstehend angegebenen Verfahrensschritte, wenn das Computerprogramm in eine Rechnereinheit geladen und/oder in einer Rechnereinheit durchgeführt wird.

Eine erfindungsgemäße Vorrichtung zum Vermessen der lokalen Brechkraft und/oder der Brechkraftverteilung eines linken und/oder eines rechten Brillenglases in einer Brillenfassung enthält wenigstens eine Bilderfassungseinrichtung und eine Rechnereinheit, in die ein Computerprogramm mit Programmcode zur Durchführung der vorstehend angegebenen Verfahrensschritte geladen ist.

Eine solche Vorrichtung kann insbesondere als ein Smartphone oder als ein Tablet-Computer oder auch als eine digitale Kamera ausgebildet sein. Nachfolgend werden vorteilhafte Ausführungsbeispiele der Erfindung beschrieben, die in den Zeichnungen schematisch dargestellt sind.

Die Genauigkeit eines SLAM-Algorithmus, welcher sowohl die Position und/oder die Lage der wenigstens einen Bilderfassungseinrichtung als auch die Position der Strukturpunkte in der Abbildung bestimmt, ist bevorzugt von der Kalibrierung der verwendeten wenigstens einen Bilderfassungseinrichtung bestimmt. Eine solche Kalibrierung ist in der Lage jeder Pixelkoordinate C der wenigstens einen Bilderfassungseinrichtung einen dreidimensionalen, in die jeweilige Bilderfassungseinrichtung einfallenden Lichtstrahl zuzuordnen. Mathematisch lässt sich eine solche Kalibrierung als intrinsischer Kamerakalibrierungsoperator $\overline{K}$ ausdrücken, der die oben beschriebenen intrinsischen Parameter enthält. Dieser Kamerakalibrierungsoperator $\overline{K}$ kann z. B. aus einer Aufnahme eines speziellen Kalibriermusters, z. B. eines Schachbrettmusters oder eines Punktemusters mittels der wenigstens einen Bilderfassungseinrichtung bestimmt werden. Alternativ hierzu ist es auch möglich, durch Auswerten einer Vielzahl von Abbildungen wenigstens einer Szene direkt aus der Vielzahl von Abbildungen der Szene, denen unterschiedliche Aufnahmepositionen zugrunde liegen können, den intrinsischen Kamerakalibrierungsoperator $\overline{K}$ zu bestimmen.

Mittels der vorstehend beschriebenen Kalibrierung kann der SLAM-Algorithmus jedem Strukturpunkt eine Vielzahl von dreidimensionalen, in die jeweilige Bilderfassungseinrichtung einfallenden Lichtstrahlen zuordnen, die das linke und rechte Brillenglas nicht durchsetzen. Aus diesen können dann die Koordinaten der Strukturpunkte im Raum bestimmt werden. Aus diesen Koordinaten im Raum und den Aufnahmen der Strukturpunkte, welche durch das rechte und/oder linke Brillenglas von der wenigstens einen Aufnahmeeinheit beobachtet wurden, lässt sich eine Vielzahl von Abbildungsstrahlengängen bestimmen, welche das rechte und/oder linke Brillenglas durchsetzen und nach Brechung durch das rechte und/oder linke Brillenglas den jeweiligen bekannten Strukturpunkt erreichen. Dieses so aufgespannte Strahlenmodell wird bevorzugt verwendet, um die dioptrische Wirkung oder die lokale Brechkraft oder die Brechkraftverteilung des linken und/oder rechten Brillenglases zu ermitteln.

Für den Fall eines regelmäßigen Musters wird durch die Aufnahme der Szene ebenfalls dessen Periodizität erfasst. Bei einer weiteren Ausführungsform der Erfindung kann aus der Interpretation der lokalen richtungsabhängigen Vergrößerung oder der lokalen richtungsabhängigen Verkleinerung des Musters durch wenigstens das rechte und/oder linke Brillenglas auf dessen lokale fokussierende Wirkung geschlossen werden. Die fokussierende Wirkung ist gemäß DIN EN ISO 13666:2013-10, Absatz 9.2, der Sammelbegriff für die sphärische und astigmatische Wirkung eines Brillenglases. Die lokale fokussierende Wirkung kann somit beispielsweise gezielt im Fern-Durchblickpunkt und/oder im Nah-Durchblickpunkt bestimmt werden. Alternativ kann durch die Bestimmung der lokalen fokussierenden Wirkung an mehreren Stellen des Brillenglases auf dessen Brechkraftverteilung zurückgeschlossen werden.

In einem weiteren Aspekt kann das vorstehend beschriebene Verfahren zusammen mit wenigstens einem weiteren Verfahren zur Anwendung kommen. Bei diesem wenigstens einen weiteren Verfahren kann es sich um ein beispielsweise um ein Verfahren zur Bestimmung eines Refraktionsfehlers eines Auges eines Nutzers handeln, bevorzugt um ein Verfahren gemäß EP 19 170 561.5, wobei dieses Verfahren die folgenden Schritte umfasst:

a) Darstellen eines Zeichens auf einem Bildschirm, wobei ein Parameter des auf dem Bildschirm dargestellten Zeichens verändert wird;

b) Erfassen einer Augenbewegungsmetrik des Auges des Nutzers in Abhängigkeit von dem auf dem Bildschirm dargestellten Zeichen; und

c) Feststellen eines Zeitpunkts, zu dem sich aus der Augenbewegungsmetrik des Auges des Nutzers eine Erkennungsschwelle des Nutzers für das auf dem Bildschirm dargestellte Zeichen ergibt; und

d) Bestimmen eines Wertes für den Refraktionsfehler des Auges des Nutzers aus dem zu dem Zeitpunkt festgelegten Parameter.

Alternativ oder zusätzlich zu dem vorstehend beschriebenen Verfahren kann es sich bei dem wenigstens einen weiteren Verfahren beispielsweise auch um ein Verfahren zur Bestimmung mindestens eines optischen Parameters eines Brillenglases handeln, bevorzugt um ein Verfahren gemäß der europäischen Patentanmeldung mit dem Anmeldungsaktenzeichen EP19170551.6 wobei dieses Verfahren folgende Schritte umfasst:

a) Aufnehmen eines Bildes unter Verwendung eines Brillenglases; und

b) Ermitteln mindestens eines optischen Parameters des Brillenglases mittels Bildverarbeitung des Bildes, wobei das Bild eine die Augen einschließende Augenpartie und/oder eine an die Augen angrenzende Gesichtspartie eines Nutzers des Brillenglases umfasst.

Alternativ oder zusätzlich zu den vorstehend beschriebenen Verfahren kann es sich bei dem wenigstens einen zusätzlichen Verfahren auch um ein Verfahren zur Bestimmung eines Refraktionsfehlers eines Auges eines Nutzers handeln, bevorzugt um ein Verfahren gemäß der europäischen Patentanmeldung mit dem Anmeldungsaktenzeichen EP19170558.1 wobei dieses Verfahren die folgenden Schritte umfasst:

a) Darstellen eines Zeichens auf einem Bildschirm, wobei ein Parameter des auf dem Bildschirm dargestellten Zeichens verändert wird;

b) Erfassen einer Reaktion des Nutzers in Abhängigkeit von dem auf dem Bildschirm dargestellten Zeichen;

c) Feststellen eines Zeitpunkts, zu dem sich aus der Reaktion des Nutzers eine Erkennbarkeit des auf dem Bildschirm dargestellten Zeichens für den Nutzer ergibt; und

d) Bestimmen eines Wertes für den Refraktionsfehler des Auges des Nutzers aus dem zu dem Zeitpunkt festgelegten Parameter, wobei das auf dem

Bildschirm dargestellte Zeichen ein periodisches Muster ist, wobei der Parameter des auf dem Bildschirm dargestellten Musters mindestens eine Ortsfrequenz umfasst, und der Wert für den Refraktionsfehler aus der zu dem Zeitpunkt festgelegten Ortsfrequenz des Musters bestimmt wird.

Alternativ oder zusätzlich zu den vorstehend beschriebenen Verfahren ist als wenigstens ein zusätzliches Verfahren auch ein Verfahren zur Bestimmung der Brechkraftverteilung eines Brillenglases möglich, bevorzugt ein Verfahren gemäß der europäischen Patentanmeldung mit dem Anmeldungsaktenzeichen EP19170714.0, welches aus dem Größen- und/oder Formvergleich der Abbildung des vorderen Augenabschnittes für eine bestimmte Durchblickrichtung eine lokale Brechkraft ermöglicht. Hierzu wird wenigstens eine Aufnahme des vorderen Augenabschnittes mit und ohne davor befindlichem Brillenglas durchgeführt und die Aufnahme mit und ohne Brillenglas jeweils miteinander verglichen.

In einer übergeordneten Anwendung können die verschiedenen vorstehend beschriebenen Verfahren, d. h. das erfindungsgemäße Verfahren sowie das wenigstens eine weitere Verfahren, kombiniert werden, um beispielsweise aus einem Vergleich der jeweils erhaltenen Ergebnisse eine höhere Genauigkeit oder eine Plausibiltätsüberprüfung der in den einzelnen Verfahren erhaltenen Ergebnisse zu erhalten. Die verschiedenen vorstehend beschriebenen Verfahren können nacheinander oder gleichzeitig in der übergeordneten Anwendung erfolgen. Erfolgen die verschiedenen Verfahren nacheinander kann deren Reihenfolge unabhängig voneinander sein und/oder es kann sich um eine beliebige Reihenfolge handeln. Erfolgen die verschiedenen Verfahren nacheinander kann es bevorzugt sein, wenigstens eines der erfindungsgemäßen Verfahren zur Bestimmung der Brechkraftverteilung zuletzt durchzuführen. Eine übergeordnete Anwendung kann beispielsweise ein die verschiedenen Verfahren umfassendes Computerprogramm sein.

Es zeigen:

Fig. 1      eine Szene mit einer Brillenfassung und mit einer Bilderfassungseinrichtung, die in unterschiedlichen Aufnahmepositionen angeordnet ist;

Fig. 2      einen Ausschnitt einer mittels der Bilderfassungseinrichtung in einer ersten Aufnahmeposition erfassten ersten Abbildung der Szene;

Fig. 3      einen Ausschnitt einer zweiten mittels der Bilderfassungseinrichtung in einer von der ersten Aufnahmeposition verschiedenen weiteren Aufnahmeposition erfassten Abbildung der Szene;

Fig. 4      ein Koordinatensystem der Szene und ein Koordinatensystem der Bilderfassungseinrichtung mit einem Brillenglas;

Fig. 5      ein Strahlenmodell einer Brillenfassung bei Beobachten der Szene aus zwei unterschiedlichen Perspektiven;

Fig. 6      eine aus dem Strahlenmodell der Brillenfassung berechnete Brechkraftverteilung;

Fig. 7      ein Flussdiagramm einer Ausgestaltung eines Verfahrens zum Vermessen eines linken und/oder rechten Brillenglases in einer Brillenfassung;

Fig. 8      ein Flussdiagramm einer weiteren Ausgestaltung eines Verfahrens zum Vermessen eines linken und/oder rechten Brillenglases in einer Brillenfassung;

Fig. 9      eine weitere Szene mit einer Brillenfassung und mit einer Bilderfassungseinrichtung, die in unterschiedlichen Aufnahmepositionen angeordnet ist;

Fig. 10     eine weitere Szene ohne die Brillenfassung mit der Bilderfassungseinrichtung;

Fig. 11     eine weitere Szene mit einer Brillenfassung und mit einer Bilderfassungseinrichtung, die in unterschiedlichen Aufnahmepositionen angeordnet ist;

Fig. 12     einen Ausschnitt der mittels der Bilderfassungseinrichtung in der ersten Aufnahmeposition erfassten Abbildung der Szene;

Fig. 13     eine weitere Szene ohne die Brillenfassung mit der Bilderfassungseinrichtung; und

Fig. 14     einen Ausschnitt der mittels der Bilderfassungseinrichtung erfassten Abbildung der Szene ohne die Brillenfassung.

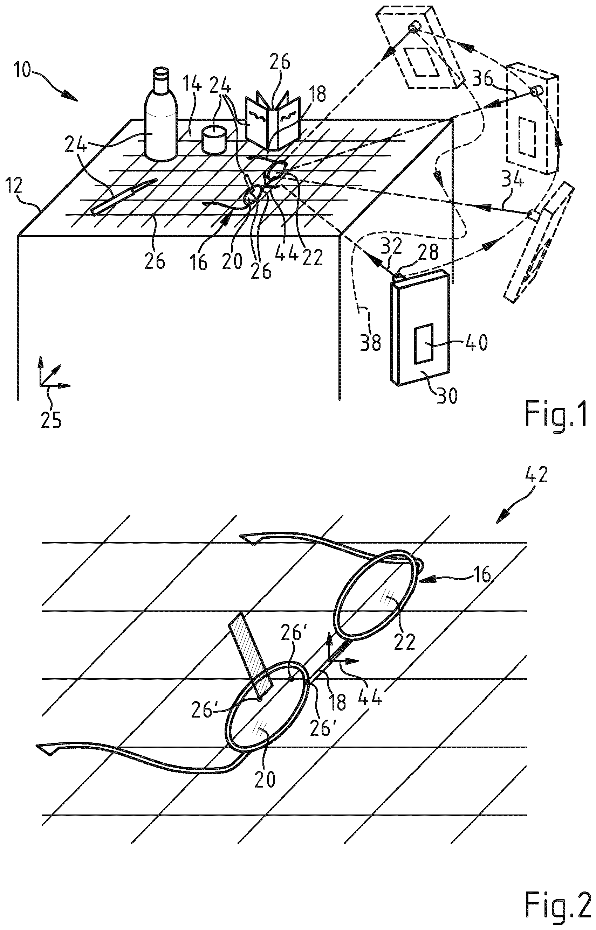

Die Fig. 1 zeigt als eine Szene 10 einen Tisch 12 mit einer Tischdecke 14, auf der eine Brille 16 mit einer Brillenfassung 18 und mit einem darin aufgenommenen linken und rechten Brillenglas 20, 22 neben weiteren Gegenständen 24 in Form eines Messers, einer Flasche, einer Tasse und eines Buchs sowie einer Zigarre angeordnet ist. Die in der Fig. 1 gezeigte Szene 10 ist zeitinvariant und enthält als Strukturpunkte 26 charakteristische Punkte eines Musters der Tischdecke 14 und der Gegenstände 24, die ein Koordinatensystem 25 der Szene 10 definieren, sowie charakteristische Punkte der Brillenfassung 18 der Brille 16.

Um die lokale Brechkraft des linken und rechten Brillenglases 20, 22 in der Brille 16 zu vermessen, wird die Szene 10 mittels der Kamera 28 in einer als ein Smartphone ausgebildeten Bilderfassungseinrichtung 30 in einer Vielzahl unterschiedlicher Aufnahmepositionen 32, 34, 36, ... aufgenommen, indem ein Benutzer das in den Videomodus geschaltete Smartphone mit einer Hand hält und dabei entlang einer Trajektorie 38 verlagert. Der Benutzer erfasst damit die Szene 10 mittels der Kamera 28 der Bilderfassungseinrichtung 30 aus unterschiedlichen Perspektiven. Für das Verarbeiten der mittels der Kamera 28 erfassten Aufnahmen der Szene 10 enthält die Bilderfassungseinrichtung 30 eine Rechnereinheit 40.

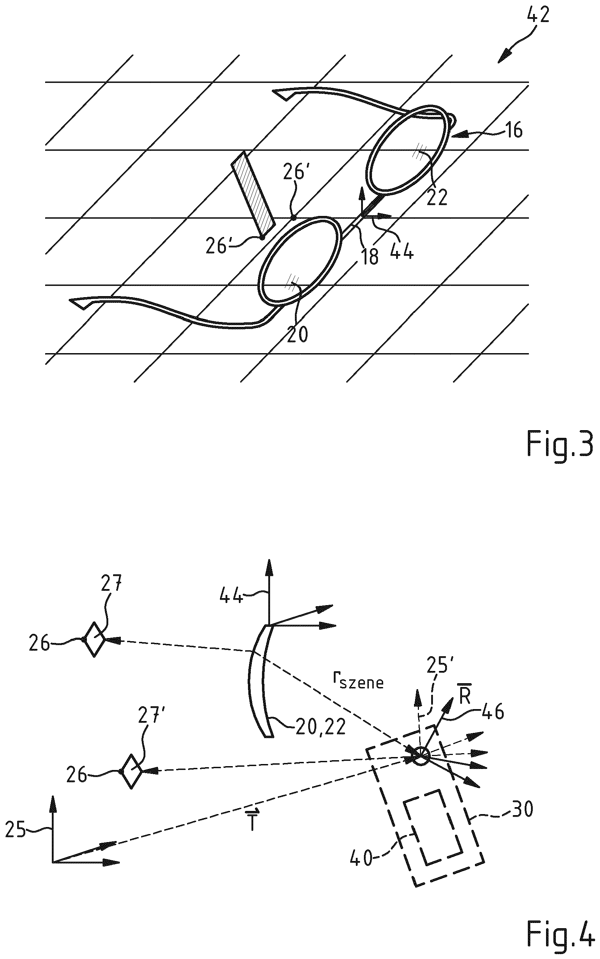

Die Fig. 2 ist ein Ausschnitt 42 einer mittels der Bilderfassungseinrichtung 30 aus einer ersten Aufnahmeposition 32 erfassten ersten Abbildung der Szene 10 mit Abbildungen 26' von Strukturpunkten 26. In der Fig. 3 ist ein weiterer Ausschnitt 42 einer mittels der Bilderfassungseinrichtung 30 aus einer von der ersten Aufnahmeposition 32 verschiedenen weiteren Aufnahmeposition 36 erfassten ersten Abbildung der Szene 10 mit Abbildungen 26' von Strukturpunkten 26 gezeigt.

Bei dem Verlagern der Bilderfassungseinrichtung 30 relativ zu der Szene 10 werden, wie sich aus der Fig. 2 und Fig. 3 ergibt, eine Vielzahl von Strukturpunkten 26 jeweils mit einem Abbildungsstrahlengang erfasst, der das erste und/oder das zweite Brillenglas 20, 22 in der Brillenfassung 18 der Brille 16 durchsetzt oder nicht durchsetzt. Außerdem werden bei dem Verlagern der Bilderfassungseinrichtung 30 relativ zu der Szene 10 Abbildungen der Szene 10 erfasst, die einen ein Koordinatensystem 44 der Brillenfassung 18 definierenden Abschnitt der Brillenfassung 18 enthalten.

Die Fig. 4 zeigt das Koordinatensystem 25 der Szene 10 und ein Koordinatensystem 46 der Bilderfassungseinrichtung 30 mit einem Brillenglas 20, 22. Aus den vielen erfassten Abbildungen der Szene 10 berechnet die Rechnereinheit 40 in der Bilderfassungseinrichtung 30 anhand eines SLAM-Algorithmus die Koordinaten der Strukturpunkte 26 eines Musters 27 in der Szene mittels eines Strahlenmodells in einem zu der Bilderfassungseinrichtung 30 referenzierten Koordinatensystem 46, das wiederum zu dem Koordinatensystem 25 der Szene 10 und dem Koordinatensystem 44 der Brillenfassung 18 der Brille 16 referenziert ist.

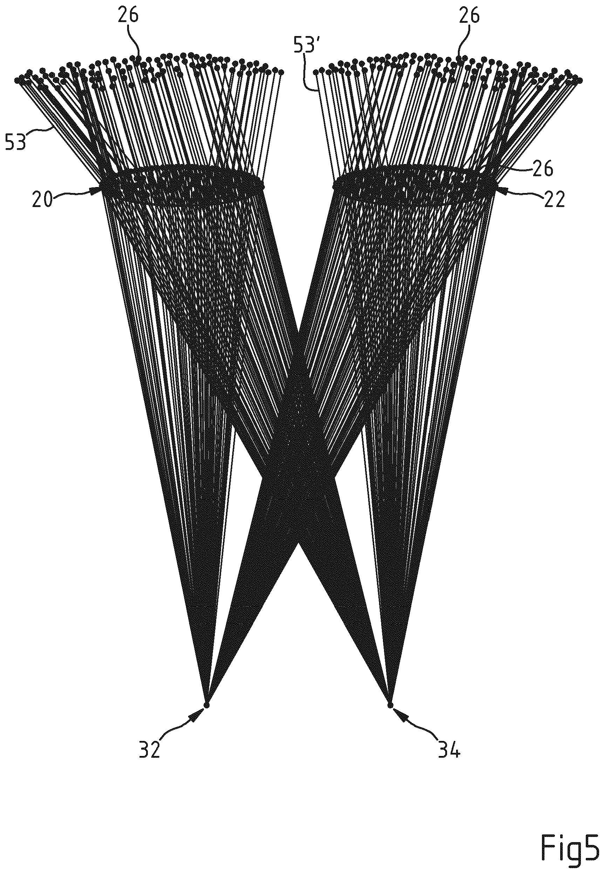

Die Fig. 5 zeigt ein Strahlenmodell der Brille 16 mit in die Kamera 28 der Bilderfassungseinrichtung 30 geführten Abbildungsstrahlengängen mit Hauptstrahlen 53, 53' für Strukturpunkte 26, wenn die Szene 10 aus zwei unterschiedlichen Aufnahmepositionen 32, 34 erfasst wird. Ein solches Strahlenmodell erfordert nicht nur eine Kenntnis der Positionen der Bilderfassungseinrichtung 30 sondern setzt auch ein dreidimensionales Modell für die Szene 10 sowie eine Kenntnis der Position der in der Fig. 1 gezeigten Brille 16 in der Szene 10 und darüber hinaus auch die Information voraus, welche Strukturpunkte 26 in der Szene 10 die Bilderfassungseinrichtung 30 durch das linke Brillenglas 20 bzw. das rechte Brillenglas 22 der Brille 16 hindurch erfasst.

Um das in der Fig. 5 gezeigte Strahlenmodell zu berechnen, wird bezugnehmend auf die Fig. 4 wie folgt vorgegangen:

Aus der Pixelkoordinate in homogenen Koordinaten

$$C = \begin{pmatrix} C_x \\ C_y \\ 1 \end{pmatrix}$$

eines in der Kamera 28 der Bilderfassungseinrichtung 30 abgebildeten Strukturpunkts 26 eines Musters 27 der Szene 10 wird bei einem bekannten Kamerakalibrierungsoperator $\bar{K}$ ein in die Kameraoptik einfallender Hauptstrahl eines Abbildungsstrahlengangs in Form eines dreidimensionalen Vektors im Koordinatensystem 46 der Bilderfassungseinrichtung der Kamera 28

$$\vec{r}_0 = \bar{K}^{-1} \cdot C$$

mit

$$\bar{K} = \begin{pmatrix} K_{11} & K_{12} & K_{13} \\ K_{21} & K_{22} & K_{23} \\ K_{31} & K_{32} & K_{33} \end{pmatrix}$$

bestimmt. Aus der bekannten räumlichen Position der Kamera 28 und deren räumlichen Lage im Koordinatensystem 25 können der Translationsoperator

$$\vec{T}$$

und der Rotationsoperator

$$\bar{R} = \begin{pmatrix} R_{11} & R_{12} & R_{13} \\ R_{21} & R_{22} & R_{23} \\ R_{31} & R_{32} & R_{33} \end{pmatrix}$$

mit

$$det\ \bar{R} = 1$$

bestimmt werden. Aus diesen wird $\bar{r}_0$ durch Lineartransformation

$$\vec{r}_{Szene} = \bar{R}^T \cdot (\vec{r}_0 - \bar{T})$$

aus dem Koordinatensystem 46 der Bilderfassungseinrichtung der Kamera 28 durch eine dem Rotationsoperator $\bar{R}$ entsprechende Drehung in das Koordinatensys

tem 25' und dann durch eine dem Translationsoperator $\bar{T}$ entsprechende Translation in das Koordinatensystem 25 der Szene 10 überführt.

Durch das Detektieren und Verfolgen von ortsfesten, zeitinvarianten Strukturpunkten 26, deren Abbildungsstrahlengänge nicht durch die Brillengläser hindurch verlaufen, über mehrere Aufnahmen an verschiedenen Aufnahmepositionen 32, 34, 36 hinweg mittels Feature-Matching-Algorithmen kann für einen jeden dieser Strukturpunkte 26 aus den intrinsischen Parametern der Bilderfassungseinrichtung sowie der Lage und Position einer Bilderfassungseinrichtung zum Zeitpunkt des Erfassens einer Abbildung damit auf deren Lage in der Szene 10 in dem Koordinatensystem 46 der Bilderfassungseinrichtung 30 geschlossen werden.

Aus einem jeden abgebildeten Strukturpunkt 26 wird dann ein Hauptstrahl 53, 53', der ein Brillenglas 20, 22 der Brille 16 durchsetzt, entsprechend der Position der Bilderfassungseinrichtung 30 berechnet. Hieraus und aus der 3D-Koordinate des Punktes ergibt sich dann ein Strahlenmodell, das verschiedene Durchblickbedingungen derselben Brille 16 in derselben Szene 10 wiederspiegelt und das Abbildungsstrahlen, die abgelenkt werden und die verschiedenen Lagen und Positionen einer Bilderfassungseinrichtung entsprechen, beschreibt.

Über einen sogenannten inversen Ansatz ist es dann möglich, aus diesem Datensatz sowohl die Position als auch die Form und Lage sowie den Brechungsindex des Materials des linken und rechten Brillenglases 20, 22 in der Brillenfassung 18 der Brille 16 zu bestimmen und damit auch deren optische Wirkung für einen Brillenträger.

Ein inverser Ansatz ist eine Umkehrung der sogenannten Vorwärtsrechnung, bei der in einer optischen Strahldurchrechnung, die auch als Raytracing bezeichnet wird, der Verlauf von Lichtstrahlen durch ein optisches System bestehend aus bekannten optischen Grenzflächen und bekannten Brechungsindizes zwischen den Grenzflächen berechnet wird. Vorausgesetzt, dass die Grenzflächen, deren Normalen und die Brechungsindizes bekannt sind, ist es damit möglich, einen jeden Lichtstrahl durch das System eindeutig zu berechnen. Im Falle des inversen Ansatzes wird dabei eine optische Grenzfläche oder ein Brechungsindex gesucht, die bzw. der zu einer gegebenen Anzahl von Lichtstrahlen passt. Um eine Fehlergröße zu bestimmen, wird die Vorwärtsrechnung anhand der mittels des inversen Ansatzes bestimmten Fläche durchgeführt und es wird dann ein Vergleich von Strahlpunkten vor und/oder hinter der jeweiligen Grenzfläche erstellt. Durch Variation der zu bestimmenden Fläche wird dann gezielt mittels eines Optimierungsverfahrens die Fehlergröße minimiert. Alternativ zu reinen Optimierungsverfahren, die durch Parametervariationen das Minimum einer Fehlerfunktion ermitteln können, ist es auch möglich, hier sogenannte Lichtpfad-Triangulationsverfahren zum Einsatz zu bringen, die auch in Kombination mit einem Optimierungsverfahren genutzt werden. Derartige Verfahren sind z.

B. in der vorstehend erwähnten Publikation "K.N. Kutukalos und E. Steger, A Theory of Refractive and specular 3D Shape by Light-Path Triangulation, University of Toronto" beschrieben.

Die dioptrische Wirkung der Brillengläser kann, wenn deren Form und Brechungsindex bekannt ist, insbesondere durch eine Vorwärtsrechnung von Strahlenbündeln berechnet werden. Der Scheitelbrechwert eines Brillenglases kann z. B. bestimmt werden, indem ein paralleles Strahlenbündel, dessen Durchmesser etwa 5 mm beträgt und das damit der Größe der Augenpupille entspricht, so durch das Brillenglas propagiert wird, dass dessen Hauptstrahl, d. h. dessen optische Achse augenseitig das Brillenglas senkrecht verlässt. Der Wert des Scheitelbrechwertes ist dann der Kehrwert des Abstands der Brillenglasfläche, aus welcher der Hauptstrahl austritt, zu dem Punkt der kleinsten Strahltaille oder Ausdehnung des Strahlenbündels.

Bei Brillengläsern umfassend wenigstens eine torische Wirkung weist die richtungsabhängige Ausdehnung des Strahlenbündels zwei Minima auf. Der Abstand dieser beiden Minima zu der Oberfläche des Brillenglases beschreibt die Wirkung der beiden Hauptschnitte. Die Differenz dieser beiden Hauptschnitte beschreibt die zylindrische Wirkung des Brillenglases. Die gesamte Ablenkung des Hauptstrahles durch das Brillenglas ist als prismatische Wirkung des Brillenglases an der jeweiligen Stelle zu betrachten.

Für die Umrechnung von Pixelkoordinaten C der Kamera 28 in der Bilderfassungseinrichtung 30 zu dem Strahlvektor eines Abbildungsstrahlengangs dient der sogenannte intrinsische Kamerakalibrierungsoperator $\overline{K}$. Der Kamerakalibrierungsoperator $\overline{K}$ kann z. B. aus einer Aufnahme eines speziellen Kalibriermusters, z. B. eines Schachbrettmusters oder eines Punktemusters mittels der Bilderfassungseinrichtung bestimmt werden. Alternativ hierzu ist es auch möglich, durch Auswerten einer Vielzahl von Aufnahmen oder Abbildungen der Szene 10 direkt aus Aufnahmen oder Abbildungen der Szene 10, denen unterschiedliche Aufnahmepositionen 32, 34, 36 zugrunde liegen, den intrinsische Kamerakalibrierungsoperator $\overline{K}$ zu bestimmen.

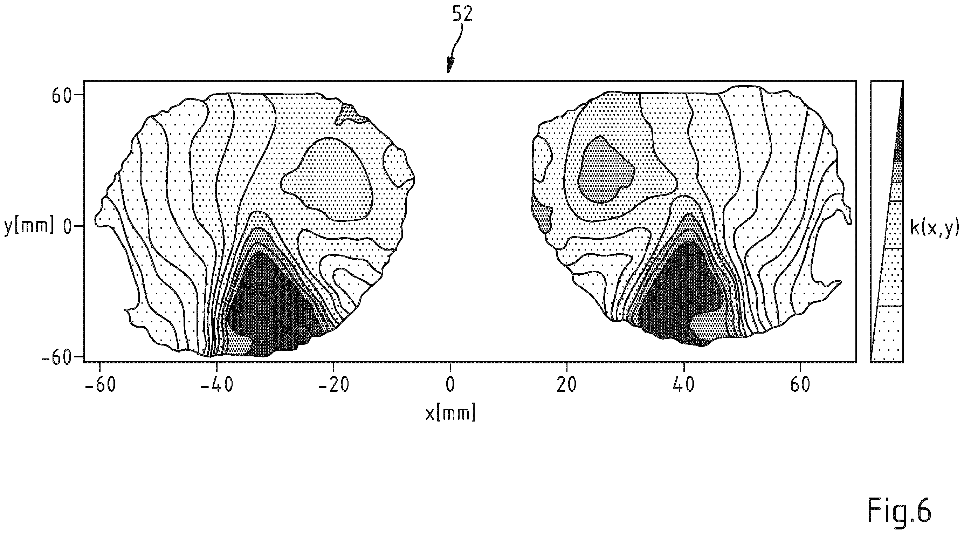

In der Fig. 6 ist ein Graph 52 zu einer anhand des in der Fig. 5 gezeigten Strahlenmodells der Brille 16 berechneten Verteilung der Brechkraft k(x,y) für das linke und rechte Brillenglas 20, 22 zu sehen.

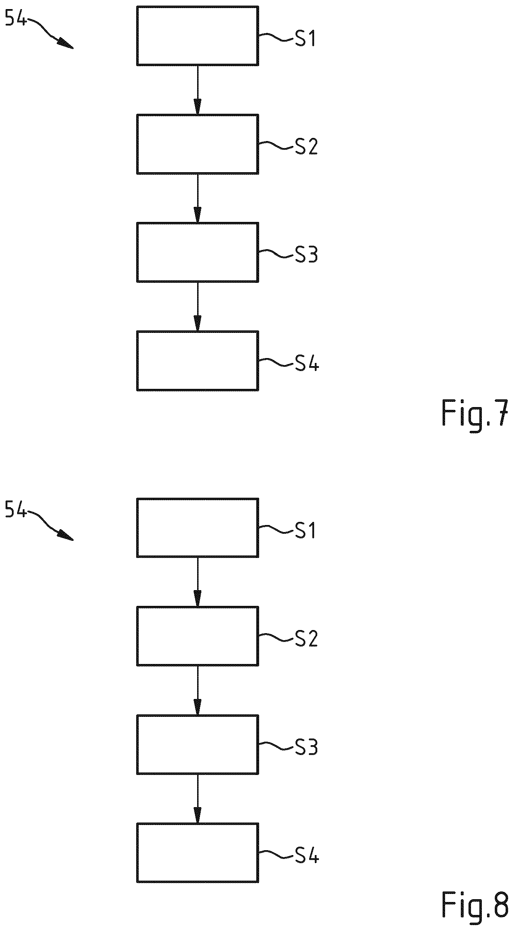

Die Fig. 7 ist ein Flussdiagramm 54 des vorstehend beschriebenen Verfahrens zum Vermessen eines linken und/oder rechten Brillenglases 20, 22 in einer Brille 16.

In einem ersten Schritt S1 wird wenigstens eine erste Abbildung einer Szene 10 mit einer Vielzahl von Strukturpunkten 26 und mit einem linken und/oder einem rechten Brillenglas 20, 22 in einer Brille 16 und mit einem ein Koordinatensystem 44 der Brillenfassung 18 der Brille 16 definierenden Abschnitt der Brillenfassung 18 der Brille 16 mittels einer Bilderfassungseinrichtung 30 mit einem Abbildungsstrahlengang für Strukturpunkte 26 erfasst, der das erste und/oder das zweite Brillenglas 20, 22 der Brille 16 durchsetzt.

In einem auf den Schritt S1 folgenden Schritt S2 werden dann wenigstens zwei weitere Abbildungen der Szene 10 ohne das erste und/oder das zweite Brillenglas 20, 22 der Brille 16 mit den in der ersten Abbildung abgebildeten Strukturpunkten 26 mittels der Bilderfassungseinrichtung 30 erfasst.

In einem Schritt S3 erfolgt dann das Berechnen der Koordinaten der ortsfesten, zeitinvarianten Strukturpunkte 26 in dem zu dem Koordinatensystem 46 der Bilderfassungseinrichtung 30 in den unterschiedlichen Aufnahmepositionen referenzierten Koordinatensystem 25 der Szene 10 aus den wenigstens zwei weiteren Abbildungen der Szene 10 mittels Bildauswertung.

In einem auf den Schritt S3 folgenden Schritt S4 wird dann die Brechkraftverteilung k(x, y) für wenigstens einen Abschnitt des linken Brillenglases 20 in dem zu dem Koordinatensystem 25 der Szene 10 referenzierten Koordinatensystem 44 der Brillenfassung 18 bestimmt und/oder es wird die Brechkraftverteilung k(x, y) für wenigstens einen Abschnitt des rechten Brillenglases 22 in einem zu dem Koordinatensystem 44 der Brillenfassung 18 referenzierten Koordinatensystem 25 der Szene 10 aus den Koordinaten der ortsfestes, zeitinvarianten Strukturpunkte 26 und dem Bild der Strukturpunkte 26 in der wenigstens einen ersten Abbildung der Szene 10 bestimmt.

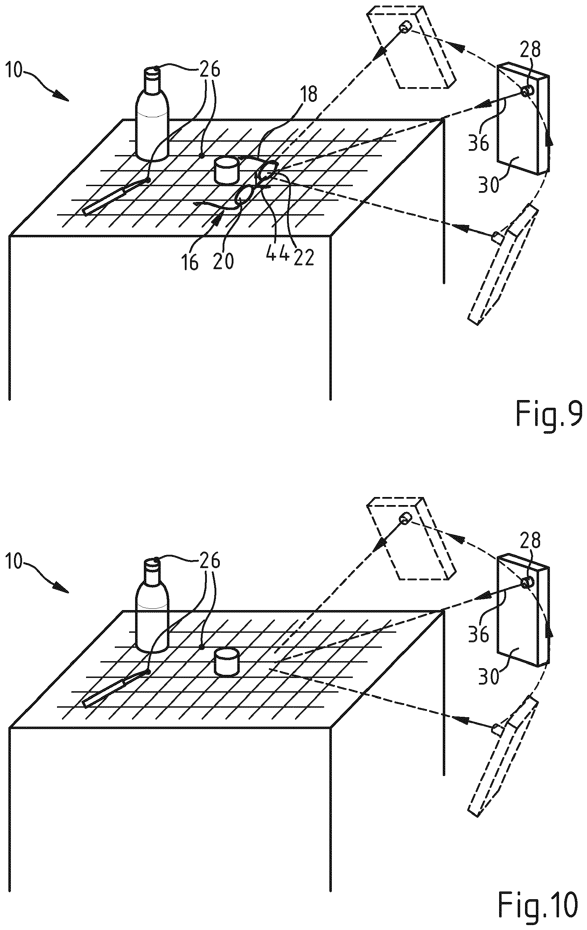

Die Fig. 8 zeigt ein Flussdiagramm 54 für ein zu dem vorstehend beschriebenen Verfahren zum Vermessen eines linken und/oder rechten Brillenglases 20, 22 in einer Brille 16 alternatives Verfahren, das nachfolgend unter Bezugnahme auf die Fig. 9 bis Fig. 12 beschrieben ist.

Auch hier wird wiederum in einem ersten Schritt S1, wie in der Fig. 9 zu sehen, mittels einer Bilderfassungseinrichtung 30 eine Sequenz von ersten Abbildungen einer zeitinvarianten Szene 10 mit einer Vielzahl von Strukturpunkten 26 und mit einem linken und/oder einem rechten Brillenglas 20, 22 in einer Brille 16 zusammen mit einem Abschnitt der Brillenfassung 18 erfasst, der ein in der Fig. 4 gezeigtes Koordinatensystem 44 der Brillenfassung 18 definiert.

Wie in der Fig. 9 zu sehen ist, erfolgt das Erfassen von Abbildungen der Szene 10 dabei mit Abbildungsstrahlengängen für Strukturpunkte 26, die das erste und/oder das zweite Brillenglas 20, 22 der Brille 16 zumindest teilweise durchsetzen und an dem ersten und/oder dem zweiten Brillenglas 20, 22 der Brille 16 zumindest teilweise vorbeigeführt sind.

In einem auf den Schritt S1 folgenden Schritt S2 wird dann, wie in der Fig. 10 zu sehen, eine Sequenz von weiteren Abbildungen der Szene 10 mit ortsfesten, zeitinvarianten Strukturpunkten 26, jedoch ohne die Brille 16 erfasst. Zu bemerken ist dabei, dass der Schritt S2 auch vor dem Schritt S1 liegen oder mit diesem gleichzeitig erfolgen kann.

In einem Schritt S3 wird das Koordinatensystem 25 der Szene 10 zu dem Koordinatensystem 44 der Brillenfassung 18 referenziert und es werden dann die Koordinaten der Strukturpunkte 26 in dem zu dem Koordinatensystem 46 der Bilderfassungseinrichtung 30 in den unterschiedlichen Aufnahmepositionen referenzierten Koordinatensystem 25 der Szene 10 aus der wenigstens einen weiteren Abbildung der Szene 10 mittels Bildauswertung berechnet.

Darauf wird in einem Schritt S4 die Brechkraftverteilung k(x,y) für wenigstens einen Abschnitt des linken Brillenglases 20 in dem zu dem Koordinatensystem 25 der Szene 10 referenzierten Koordinatensystem 44 der Brillenfassung 18 bestimmt und/oder es wird die Brechkraftverteilung k(x, y) für wenigstens einen Abschnitt des rechten Brillenglases 22 in dem Koordinatensystem 44 der Brillenfassung 18 aus den Koordinaten der Strukturpunkte 26 und dem Bild der Strukturpunkte 26 in der wenigstens einen ersten Abbildung der Szene 10 bestimmt.

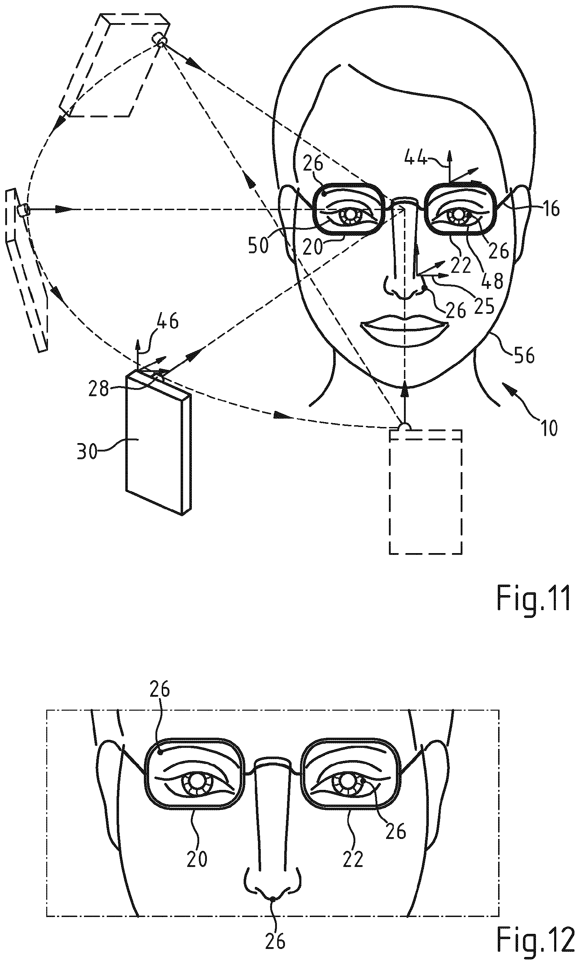

Wie die Fig. 11 bis Fig. 14 zeigen, ist das Vermessen eines linken und/oder rechten Brillenglases 20, 22 in einer Brillenfassung 18 auch durch Erfassen von Abbildungen einer Szene 10 möglich, in der sich ein Brillenträger mit Brille und ohne Brille befindet. Dabei wird, wie in der Fig. 11 zu sehen, mittels einer Bilderfassungseinrichtung 30 eine Sequenz von ersten Abbildungen einer zeitinvarianten Szene 10 mit einer Vielzahl von Strukturpunkten 26 und mit einem linken und/oder einem rechten Brillenglas 20, 22 in einer Brillenfassung 18 zusammen mit einem Abschnitt der Brillenfassung 18 erfasst, der ein Koordinatensystem 44 der Brillenfassung 18 definiert. Wie die Fig. 12 zeigt, erfolgt das Erfassen von Abbildungen der Szene 10 dabei mit Abbildungsstrahlengängen für Strukturpunkte 26, die das erste und/oder das zweite Brillenglas 20, 22 der Brille 16 zumindest teilweise durchsetzen und die an dem ersten und/oder dem zweiten Brillenglas 20, 22 der Brille 16 zumindest teilweise vorbei geführt sind.

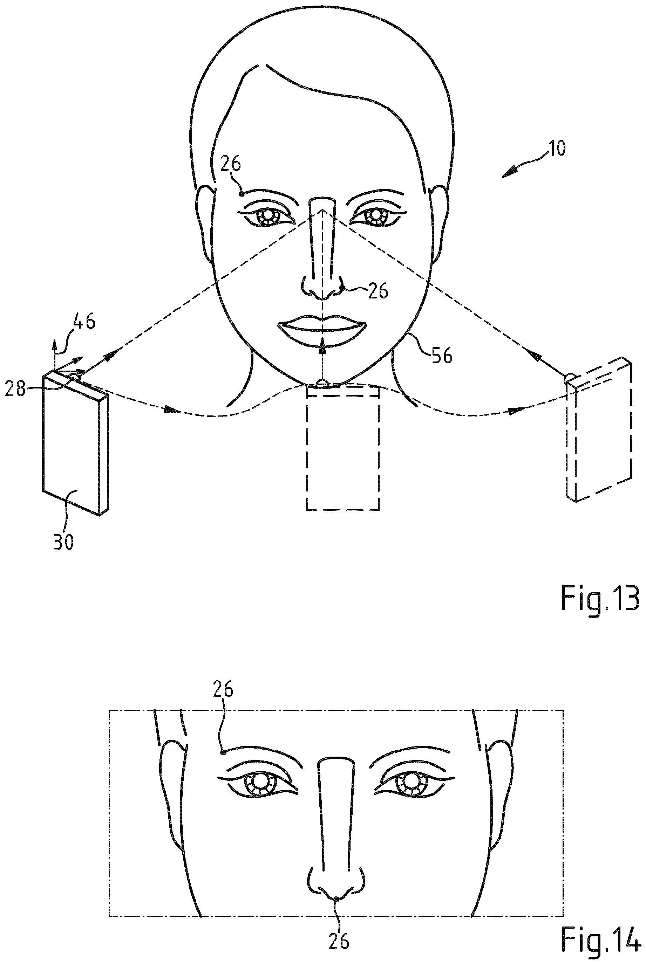

Dann wird, wie in der Fig. 13 und Fig. 14 zu sehen, eine Sequenz von weiteren Abbildungen der Szene 10 mit Strukturpunkten 26, jedoch ohne die Brille 16 erfasst. Darauf werden dann wiederum die Koordinaten der Strukturpunkte 26 in einem zu dem Koordinatensystem 46 der Bilderfassungseinrichtung 30 bei unterschiedlichen Aufnahmepositionen referenzierten Koordinatensystem 25 der Szene 10 aus der wenigstens einen weiteren Abbildung der Szene 10 mittels Bildauswertung berechnet und es wird das Koordinatensystem 25 der Szene 10 zu dem Koordinatensystem 44 der Brillenfassung 18 referenziert. Dann wird die Brechkraftverteilung k(x,y) für wenigstens einen Abschnitt des linken Brillenglases 20 in dem Koordinatensystem 44 der Brillenfassung 18 bestimmt und/oder es wird die Brechkraftverteilung k(x,y) für wenigstens einen Abschnitt des rechten Brillenglases 22 in dem Koordinatensystem 44 der Brillenfassung 18 aus den Koordinaten der Strukturpunkte 26 und dem Bild der Strukturpunkte 26 in der wenigstens einen ersten Abbildung der Szene 10 bestimmt.

Weil sich Strukturpunkte 26 in der Szene 10, die in der Fig. 11 und Fig. 13 gezeigt ist, aufgrund von Bewegungen des Brillenträgers verlagern können, enthält die Rechnereinheit der Bilderfassungseinrichtung 30 hier eine Programmroutine, mittels der die Lage der Strukturpunkte 26 durch Auswerten von Nachbarschaftsbeziehungen, insbesondere Abständen zwischen den Strukturpunkten 26 in der Szene 10, in einem zu dem Koordinatensystem 44 der Brillenfassung 18 referenzierten Koordinatensystem 25 der Szene 10 berechnet wird.

Es kann vorgesehen sein, die Nachbarschaftsbeziehungen zwischen den Strukturpunkten 26 in der Szene 10 auszuwerten, um eine Verlagerung von Strukturpunkten 26 in einem Koordinatensystem 25 der Szene 10 zu erkennen und die Koordinaten von in einer Szene 10 verlagerten Strukturpunkten 26 bei dem Bestimmen der Brechkraftverteilung für wenigstens einen Abschnitt des rechten Brillenglases 22 und des linken Brillenglases 20 in dem Koordinatensystem 44 der Brillenfassung 18 nicht zu berücksichtigen, damit Bewegungen von Strukturpunkten 26 in der Szene 10 das Messergebnis für die lokale Brechkraft des linken und rechten Brillenglases 20, 22 nicht verfälschen.

Zusammenfassend ist insbesondere folgendes festzuhalten: Die Erfindung betrifft ein Verfahren zum Vermessen der lokalen Brechkraft oder der Brechkraftverteilung eines linken und/oder eines rechten Brillenglases 20, 22 in einer Brillenfassung 18. Dabei wird wenigstens eine erste Abbildung einer Szene 10 mit zumindest einem Strukturpunkt 26 und mit einem linken und/oder einem rechten Brillenglas 20, 22 in einer Brillenfassung 18 mittels einer Bilderfassungseinrichtung 30 aus wenigstens einer ersten Aufnahmeposition 32 mit wenigstens einem Abbildungsstrahlengang für Strukturpunkte 26 erfasst, der das erste und/oder das zweite Brillenglas 20, 22 in der Brillenfassung 18 durchsetzt. Es werden wenigstens zwei weitere Abbildungen der Szene 10 ohne das erste und/oder das zweite Brillenglas 20, 22 der Brillenfassung 18 oder ohne die Brillenfassung enthaltend das linke und/oder das rechte Brillenglas mit den in der ersten Abbildung abgebildeten Strukturpunkten 26 mittels der Bilderfassungseinrichtung 30 aus wenigstens zwei verschiedenen Aufnahmepositionen 32, 34, 36, von denen eine zu der ersten Aufnahmeposition identisch sein kann, erfasst und es werden die Koordinaten der Strukturpunkte 26 in einem Koordinatensystem 25 aus den wenigstens zwei weiteren Abbildungen der Szene 10 mittels Bildauswertung berechnet, oder es werden wenigstens zwei weitere Abbildungen der Szene 10 mit dem linken und/oder dem rechten Brillenglas 20, 22 mittels einer Bilderfassungseinrichtung 30 aus wenigstens zwei von der ersten Aufnahmeposition verschiedenen weiteren Aufnahmepositionen mit wenigstens einem Abbildungsstrahlengang für die in der ersten Abbildung abgebildeten Strukturpunkte 26 erfasst, der das erste und/oder das zweite Brillenglas 20, 22 der Brillenfassung 18 nicht durchsetzt, um dann eine Brechkraftverteilung k(x,y) für wenigstens einen Abschnitt des linken Brillenglases 20 in einem zu dem Koordinatensystem 44 der Brillenfassung 18 referenzierten Koordinatensystem 25 der Szene 10 und/oder eine Brechkraftverteilung $k(x,y)$ für wenigstens einen Abschnitt des rechten Brillenglases 22 in einem Koordinatensystem 25 aus den Koordinaten der Strukturpunkte 26 und dem Bild der Strukturpunkte 26 in der wenigstens einen ersten Abbildung der Szene 10 zu bestimmen.

**Bezugszeichenliste**

| 10 | Szene |
|---|---|
| 12 | Tisch |
| 14 | Tischdecke |
| 16 | Brille |
| 18 | Brillenfassung |
| 20 | linkes Brillenglas |
| 22 | rechtes Brillenglas |
| 24 | Gegenstände |
| 25 | Koordinatensystem der Szene |
| 25' | Koordinatensystem der Szene nach Translation |
| 26 | Strukturpunkt |
| 26' | Abbildungen von Strukturpunkt |
| 27 | Muster |
| 28 | Kamera |
| 30 | Bilderfassungseinrichtung |
| 32, 34, 36 | Aufnahmeposition |
| 38 | Trajektorie |
| 40 | Rechnereinheit |
| 42 | Ausschnitt |
| 44 | Koordinatensystem der Fassung |
| 46 | Koordinatensystem Bilderfassungseinrichtung |
| 48 | linkes Auge |
| 50 | rechtes Auge |
| 52 | Graph |
| 53, 53' | Hauptstrahl |
| 54 | Flussdiagramm |

| $C$ | Pixelkoordinate |
|---|---|
| $\overline{K}$ | Kamerakalibrierungsoperator |
| $\overline{R}$ | Rotationsoperator |
| $\vec{T}$ | Translationsoperator |
| S1,S2,S3,S4 | Schritt |
| $k(x,y)$ | lokale Brechkraft bzw. Brechkraftverteilung |

**Patentansprüche**

1. Verfahren zum Vermessen der lokalen Brechkraft eines linken und/oder eines rechten Brillenglases (20, 22) in einer Brillenfassung (18),

   mit einem Schritt des Erfassens wenigstens einer ersten Abbildung einer Szene (10) mit vielen Strukturpunkten (26) und mit einem linken und/oder einem rechten Brillenglas (20, 22) in der Brillenfassung (18) mittels wenigstens einer Bilderfassungseinrichtung (30) aus wenigstens einer ersten Aufnahmeposition (32) mit wenigstens einem Abbildungsstrahlengang für jeden dieser Strukturpunkte (26), der das linke und/oder das rechte Brillenglas (20, 22) durchsetzt,

   mit einem Schritt des Erfassens wenigstens zweier weiterer Abbildungen der Szene (10) ohne das linke und/oder das rechte Brillenglas (20, 22) der Brillenfassung (18) oder ohne die Brillenfassung (18) enthaltend das linke und/oder das rechte Brillenglas (20, 22) mit den in der ersten Abbildung abgebildeten Strukturpunkten (26) mittels der wenigstens einen Bilderfassungseinrichtung (30) aus wenigstens zwei verschiedenen Aufnahmepositionen (32, 34, 36), von denen eine zu der ersten Aufnahmeposition (32) identisch sein kann; und

   mit einem Schritt des Berechnens der Koordinaten der Strukturpunkte (26) in einem Koordinatensystem (25) aus den wenigstens zwei weiteren Abbildungen der Szene (10) mittels Bildauswertung mittels Triangulation

   **gekennzeichnet durch**

   einen Schritt des Bestimmens einer lokalen Brechkraft des linken Brillenglases (20) und/oder des rechten Brillenglases (22) aus den Koordinaten der Strukturpunkte (26) und dem Bild der Strukturpunkte (26) in der wenigstens einen ersten Abbildung der Szene (10) mittels eines inversen Ansatzes, bei dem aus den Abbildungsstrahlengängen für die Strukturpunkte (26) die optischen Grenzflächen des linken und/oder rechten Brillenglases (20, 22) berechnet werden, indem durch Variation der jeweils zu bestimmenden Grenzfläche eine Fehlergröße minimiert wird, wobei die Fehlergröße zu der Grenzfläche bestimmt wird, indem mittels Ray-Tracing ein Vergleich von Strahlpunkten vor und hinter der Grenzfläche erstellt wird.

2. Verfahren zum Vermessen der lokalen Brechkraft eines linken und/oder eines rechten Brillenglases (20, 22) in einer Brillenfassung (18),

   mit einem Schritt des Erfassens wenigstens einer ersten Abbildung einer Szene (10) mit vielen Strukturpunkten (26) und mit einem linken und/oder einem rechten Brillenglas (20, 22) in der Brillenfassung (18) mittels wenigstens einer Bilderfassungseinrichtung (30) aus wenigstens einer ersten Aufnahmeposition (32) mit wenigstens einem Abbildungsstrahlengang für jeden dieser Strukturpunkte (26), der das linke und/oder das rechte Brillenglas (20, 22) durchsetzt,

mit einem Schritt des Erfassens wenigstens zweier weiterer Abbildungen der Szene (10) mit dem linken und/oder dem rechten Brillenglas (20, 22) mittels wenigstens einer Bilderfassungseinrichtung (30) aus wenigstens zwei unterschiedlichen von der ersten Aufnahmeposition (32) verschiedenen weiteren Aufnahmepositionen (34, 36) mit jeweils wenigstens einem Abbildungsstrahlengang für die in der ersten Abbildung erfassten Strukturpunkte (26), die das linke und das rechte Brillenglas (20, 22) der Brillenfassung (18) nicht durchsetzen; und

mit einem Schritt des Berechnens der Koordinaten der Strukturpunkte (26) aus den wenigstens zwei weiteren Abbildungen der Szene (10) mittels Bildauswertung mittels Triangulation **gekennzeichnet durch**

einen Schritt des Bestimmens einer lokalen Brechkraft des linken Brillenglases (20) und/oder des rechten Brillenglases (22) aus den Koordinaten der Strukturpunkte (26) und dem Bild der Strukturpunkte (26) in der wenigstens einen ersten Abbildung der Szene (10), mittels eines inversen Ansatzes, bei dem aus den Abbildungsstrahlengängen für die Strukturpunkte (26) die optischen Grenzflächen des linken und/oder rechten Brillenglases (20, 22) berechnet werden, indem durch Variation der jeweils zu bestimmenden Grenzfläche eine Fehlergröße minimiert wird, wobei die Fehlergröße zu der Grenzfläche bestimmt wird, indem mittels Ray-Tracing ein Vergleich von Strahlpunkten vor und hinter der Grenzfläche erstellt wird.

3. Verfahren nach Anspruch 1 oder 2, **gekennzeichnet durch** das Erfassen einer Vielzahl erster Abbildungen der Szene (10) und einer Vielzahl weiterer Abbildungen der Szene (10), wobei die Koordinaten der Strukturpunkte (26) in dem Koordinatensystem (25) aus der Vielzahl weiterer Abbildungen der Szene (10) berechnet werden.

4. Verfahren nach einem der Ansprüche 1-3, **dadurch gekennzeichnet, dass** die Szene (10) ein linkes Auge (48) und/oder rechtes Auge (50) eines Brillenträgers der Brillenfassung (18) enthält.

5. Verfahren nach Anspruch 4, **dadurch gekennzeichnet, dass** mittels der Bilderfassungseinrichtung (30) eine Vielzahl von Abbildungen der Szene (10) unter Verlagerung der Bilderfassungseinrichtung (30) erfasst wird, wobei das linke Auge (48) und/oder das rechte Auge (50) des Trägers der Brillenfassung (18) zu der verlagerten Bilderfassungseinrichtung (30) blickt und aus der Vielzahl von dabei erfassten Abbildungen der Szene (10) Durchblickstrahlengänge für verschiedene Durchblickrichtungen des linken Auges (48) und/oder rechten Auges (50) des Trägers der Brillenfassung (18) durch das linke Brillenglas (20) und/oder das rechte Brillenglas (22) der Brillenfassung (18) berechnet werden und für eine jede Durchblickrichtung eine lokale Brechkraft k(x, y) des linken Brillenglases (20) und/oder des rechten Brillenglases (22) bestimmt wird.

6. Verfahren nach einem der Ansprüche 1 bis 5, **dadurch gekennzeichnet, dass** für das Berechnen intrinsischer Parameter der wenigstens einen Bilderfassungseinrichtung (30) ein SLAM-Algorithmus verwendet wird.

7. Verfahren nach Anspruch 6 **gekennzeichnet durch** intrinsische Parameter aus der Gruppe Brennweite, Bildzentrum, Scherungsparameter, Skalierungsparameter, Verzerrungsparameter.

8. Verfahren nach einem der Ansprüche 1 bis 7, **dadurch gekennzeichnet, dass** für das Berechnen der Koordinaten der Strukturpunkte (26) und/oder der Aufnahmepositionen (32, 34, 36) der wenigstens einen Bilderfassungseinrichtung (30) in dem Koordinatensystem (25) ein SLAM-Algorithmus verwendet wird; und/oder dass die Koordinaten zumindest eines Teils der Strukturpunkte (26) in der Szene (10) invariant ist; und/oder dass die Koordinaten der Strukturpunkte (26) durch Auswerten von Verschiebungen zwischen den Abbildern der Strukturpunkte (26) in der Szene (10) aus verschiedenen Aufnahmepositionen (32, 34, 36) in einem Koordinatensystem (25) berechnet werden.

9. Verfahren nach einem der Ansprüche 1 bis 8, **dadurch gekennzeichnet, dass** durch Auswerten von Nachbarschaftsbeziehungen zwischen den Strukturpunkten (26) in der Szene (10) eine Verlagerung von Strukturpunkten (26) in einem Koordinatensystem (25) erkannt und die Koordinaten von in einer Szene (10) verlagerten Strukturpunkten (26) bei dem Bestimmen einer Brechkraftverteilung k(x,y) für wenigstens einen Abschnitt des rechten Brillenglases (22) und/oder des linken Brillenglases (20) nicht berücksichtigt werden.

10. Verfahren zum Vermessen der Brechkraftverteilung k(x,y) eines linken und/oder eines rechten Brillenglases (20, 22) in einer Brillenfassung (18), bei dem eine lokale Brechkraft des linken und/oder rechten Brillenglases (20, 22) an einer Vielzahl von unterschiedlichen Stellen des linken und/oder rechten Brillenglases (20, 22) nach einem der Ansprüche 1 bis 9 vermessen wird.

11. Computerprogrammprodukt mit einem Computerprogramm mit Programmcode zur Durchführung aller Verfahrensschritte, die in einem der Ansprüche 1 bis 10 angegeben sind, wenn das Computerprogramm in einer Rechnereinheit einer Vorrichtung nach Anspruch 12 geladen und/oder in einer Rechnereinheit einer Vorrichtung nach Anspruch 12 durchgeführt wird.

12. Vorrichtung zum Vermessen der lokalen Brechkraft eines linken und/oder eines rechten Brillenglases (20, 22) in einer Brillenfassung (18) mit einer Bilderfassungseinrichtung (30) und mit einer Rechnereinheit (40), in die ein Computerprogramm mit Programmcode zur Durchführung aller Verfahrensschritte geladen ist, die in einem der Ansprüche 1 bis 9 angegeben sind, oder zum Vermessen der Brechkraftverteilung eines linken und/oder eines rechten Brillenglases (20, 22) in einer Brillenfassung (18) mit einer Bilderfassungseinrichtung (30) und mit einer Rechnereinheit (40), in die ein Computerprogramm mit Programmcode zur Durchführung aller Verfahrensschritte geladen ist, die in Anspruch 10 angegeben sind.

13. Als ein Smartphone oder als ein Tablet-Computer oder als eine Kamera (28) ausgebildete Vorrichtung nach Anspruch 12.

14. Computerlesbarer Datenträger, auf dem das Computerprogrammprodukt nach Anspruch 11 gespeichert ist.

15. Datenträgersignal, das das Computerprogramm nach Anspruch 11 überträgt.

**Claims**

1. Method for measuring the local refractive power of a left and/or a right spectacle lens (20, 22) in a spectacle frame (18),

    including a step of capturing at least one first image representation of a scene (10) with many structure points (26) and with a left and/or a right spectacle lens (20, 22) in the spectacle frame (18) by means of at least one image capture device (30) from at least one first recording position (32) with at least an imaging beam path for each of these structure points (26), said imaging beam path passing through the left and/or the right spectacle lens (20, 22),
    including a step of capturing at least two further image representations of the scene (10) without the left and/or the right spectacle lens (20, 22) of the spectacle frame (18) or without the spectacle frame (18) containing the left and/or the right spectacle lens (20, 22) with the structure points (26) imaged in the first image representation by means of the at least one image capture device (30) from at least two different recording positions (32, 34, 36), one of which can be identical to the first recording position (32); and including a step of calculating the coordinates of the structure points (26) in a coordinate system (25) from the at least two further image representations of the scene (10) by means of image evaluation by means of triangulation, **characterized by** a step of determining a local refractive power of the left spectacle lens (20) and/or of the right spectacle lens (22) from the coordinates of the structure points (26) and the image of the structure points (26) in the at least one first image representation of the scene (10) by means of an inverted approach, in which the optical interfaces of the left and/or right spectacle lens (20, 22) are calculated from the imaging beam paths for the structure points (26) by virtue of the variation of the interface to be determined in each case leading to a minimization of an error term, the error term being determined for the interface by virtue of ray tracing being used to create a comparison of beam points upstream and downstream of the interface.

2. Method for measuring the local refractive power of a left and/or a right spectacle lens (20, 22) in a spectacle frame (18),

    including a step of capturing at least one first image representation of a scene (10) with many structure points (26) and with a left and/or a right spectacle lens (20, 22) in the spectacle frame (18) by means of at least one image capture device (30) from at least one first recording position (32) with at least an imaging beam path for each of these structure points (26), said imaging beam path passing through the left and/or the right spectacle lens (20, 22), including a step of capturing at least two further image representations of the scene (10) with the left and/or the right spectacle lens (20, 22) by means of at least one image capture device (30) from at least two different further recording positions (34, 36), which differ from the first recording position (32) and which each have at least one imaging beam path for the structure points (26) captured in the first image representation, said imaging beam paths not passing through the left and the right spectacle lens (20, 22) of the spectacle frame (18); and including a step of calculating the coordinates of the structure points (26) from the at least two further image representations of the scene (10) by means of image evaluation by means of triangulation,

**characterized by**

a step of determining a local refractive power of the left spectacle lens (20) and/or of the right spectacle lens (22) from the coordinates of the structure points (26) and the image of the structure points (26) in the at least one first image representation of the scene (10) by means of an inverted approach, in which the optical interfaces of the left and/or right spectacle lens (20, 22) are calculated from the imaging beam paths for the structure points (26) by virtue of the variation of the interface to be determined in each case leading to a minimization of an error term, the error term being determined for the interface by virtue of ray tracing being used to create a comparison of beam points upstream and downstream of the interface.

3. Method according to Claim 1 or 2, **characterized by** capturing a multiplicity of first image representations of the scene (10) and a multiplicity of further image representations of the scene (10), wherein the coordinates of the structure points (26) in the coordinate system (25) are calculated from the multiplicity of further image representations of the scene (10).

4. Method according to any of Claims 1-3, **characterized in that** the scene (10) contains a left eye (48) and/or right eye (50) of a spectacle wearer of the spectacle frame (18).

5. Method according to Claim 4, **characterized in that** the image capture device (30) is used to capture a multiplicity of image representations of the scene (10) with a displacement of the image capture device (30), wherein the left eye (48) and/or the right eye (50) of the wearer of the spectacle frame (18) gazes at the displaced image capture device (30) and viewing beam paths for different viewing directions of the left eye (48) and/or right eye (50) of the wearer of the spectacle frame (18) through the left spectacle lens (20) and/or the right spectacle lens (22) of the spectacle frame (18) are calculated from the multiplicity of image representations of the scene (10) captured in the process and a local refractive power $k(x, y)$ of the left spectacle lens (20) and/or of the right spectacle lens (22) is determined for each viewing direction therethrough.

6. Method according to any of Claims 1 to 5, **characterized in that** a SLAM algorithm is used to calculate intrinsic parameters of the at least one image capture device (30).

7. Method according to Claim 6, **characterized by** intrinsic parameters from the group of focal length, image centre, shearing parameters, scaling parameters, distortion parameters.

8. Method according to any of Claims 1 to 7, **characterized in that** a SLAM algorithm is used to calculate the coordinates of the structure points (26) and/or the recording positions (32, 34, 36) of the at least one image capture device (30) in the coordinate system (25); and/or **in that** the coordinates of at least some of the structure points (26) in the scene (10) are invariant; and/or **in that** the coordinates of the structure points (26) are calculated in a coordinate system (25) by evaluating displacements between the image representations of the structure points (26) in the scene (10) from different recording positions (32, 34, 36).

9. Method according to any of Claims 1 to 8, **characterized in that** a displacement of structure points (26) in a coordinate system (25) is recognized by evaluating proximity relations between the structure points (26) in the scene (10), and the coordinates of structure points (26) displaced in a scene (10) are not taken into account when determining a refractive power distribution $k(x,y)$ for at least one section of the right spectacle lens (22) and/or the left spectacle lens (20).

10. Method for measuring the refractive power distribution $k(x,y)$ of a left and/or a right spectacle lens (20, 22) in a spectacle frame (18), wherein a local refractive power of the left and/or right spectacle lens (20, 22) is measured according to any of Claims 1 to 9 at a plurality of different locations on the left and/or right spectacle lens (20, 22).

11. Computer program product comprising a computer program having program code for carrying out all method steps which are specified in any of Claims 1 to 10 when the computer program is loaded on a computer unit of an apparatus according to Claim 12 and/or executed on a computer unit of an apparatus according to Claim 12.

12. Apparatus for measuring the local refractive power of a left and/or a right spectacle lens (20, 22) in a spectacle frame (18), comprising an image capture device (30) and comprising a computer unit (40), loaded onto which is a computer program with program code for carrying out all method steps specified in any of Claims 1 to 9, or for measuring the refractive power distribution of a left and/or a right spectacle lens (20, 22) in a spectacle frame (18), comprising an image capture device (30) and comprising a computer unit (40), loaded onto which is a computer program with program code for carrying out all method steps specified in Claim 10.

13. Apparatus according to Claim 12, embodied as a smartphone or as a tablet computer or as a camera (28).

**14.** Computer-readable data medium, on which the computer program product according to Claim 11 is stored.

**15.** Data medium signal, which transmits the computer program according to Claim 11.

## Revendications

**1.** Procédé de mesure de la vergence locale d'un verre de lunettes gauche et/ou d'un verre de lunettes droit (20, 22) dans une monture de lunettes (18), ledit procédé comprenant

une étape de capture d'au moins une première reproduction d'une scène (10) à l'aide de nombreux points de structure (26) et d'un verre de lunettes gauche et/ou d'un verre de lunettes droit (20, 22) dans la monture de lunettes (18) au moyen d'au moins un dispositif de capture d'images (30) à partir d'au moins une première position de réception (32) avec au moins un trajet de faisceau de reproduction pour chacun de ces points de structure (26) qui traverse le verre de lunettes gauche et/ou le verre de lunettes droit (20, 22),

une étape de capture d'au moins deux autres reproductions de la scène (10) sans le verre de lunettes gauche et/ou le verre de lunettes droit (20, 22) de la monture de lunettes (18) ou sans la monture de lunettes (18) contenant le verre de lunettes gauche et/ou le verre de lunettes droit (20, 22) avec les points de structure (26) reproduits sur la première reproduction au moyen de l'au moins un dispositif de capture d'images (30) à partir d'au moins deux positions de réception différentes (32, 34, 36) dont l'une peut être identique à la première position de réception (32) ; et

une étape de calcul des coordonnées des points de structure (26) dans un système de coordonnées (25) à partir des au moins deux autres reproductions de la scène (10) au moyen d'une évaluation d'image par triangulation,
**caractérisé par**
une étape de détermination d'une vergence locale du verre de lunettes gauche (20) et/ou du verre de lunettes droit (22) à partir des coordonnées des points de structure (26) et de l'image des points de structure (26) dans au moins une première reproduction de la scène (10) au moyen d'une approche inverse dans laquelle les surfaces limites optiques du verre de lunettes gauche et/ou du verre de lunettes droit (20, 22) sont calculées à partir des trajets de faisceau de reproduction pour les points de structure (26) par minimisation de la taille d'un défaut par variation de la surface limite à déterminer à chaque fois, la taille du défaut par rapport la surface limite étant déterminée par comparaison de points de faisceau devant et derrière la surface limite par traçage de rayons.

**2.** Procédé de mesure de la vergence locale d'un verre de lunettes gauche et/ou d'un verre de lunettes droit (20, 22) dans une monture de lunettes (18), ledit procédé comprenant

une étape de capture d'au moins une première reproduction d'une scène (10) à l'aide de nombreux points de structure (26) et d'un verre de lunettes gauche et/ou d'un verre de lunettes droit (20, 22) dans la monture de lunettes (18) au moyen d'au moins un dispositif de capture d'images (30) à partir d'au moins une première position de réception (32) avec pour chacun de ces points de structure (26) au moins un trajet de faisceau de reproduction qui traverse le verre de lunettes gauche et/ou le verre de lunettes droit (20, 22),

une étape de capture d'au moins deux autres reproductions de la scène (10) à l'aide du verre de lunettes gauche et/ou du verre de lunettes droit (20, 22) au moyen d'au moins un dispositif de capture d'images (30) à partir d'au moins deux autres positions de réception (34, 36) différentes de la première position de réception (32) comportant chacune au moins un trajet de faisceau de reproduction pour les points de structure (26) capturés dans la première reproduction qui ne traversent pas le verre de lunettes gauche et le verre de lunettes droit (20, 22) de la monture de lunettes (18) ; et

une étape de calcul des coordonnées des points de structure (26) à partir d'au moins deux autres reproductions de la scène (10) au moyen d'une évaluation d'image par triangulation
**caractérisé par**
une étape de détermination d'une vergence locale du verre de lunettes gauche (20) et/ou du verre de lunettes droit (22) à partir des coordonnées des points de structure (26) et de l'image des points de structure (26) dans au moins une première reproduction de la scène (10) par une approche inverse dans laquelle les surfaces limites optiques du verre de lunettes gauche et/ou du verre de lunettes droit (20, 22) sont calculées à partir des trajets de faisceaux de reproduction pour les points de structure (26) par minimisation de la taille d'un défaut par variation de la surface limite à déterminer à chaque fois, la taille du défaut par rapport à la surface limite étant déterminée par comparaison de points de faisceau devant et derrière la surface limite par traçage de rayons.

**3.** Procédé selon la revendication 1 ou 2, **caractérisé par** la capture d'un grand nombre de premières reproductions de la scène (10) et d'un grand nombre d'autres reproductions de la scène (10), les coordonnées des points de structure (26) dans le système de coordonnées (25) étant calculées à partir du grand nombre d'autres reproductions de la scène (10).

**4.** Procédé selon l'une des revendications 1 à 3, **caractérisé en ce que** la scène (10) contient un œil gauche (48) et/ou un œil droit (50) d'un porteur de la monture de lunettes (18).

**5.** Procédé selon la revendication 4, **caractérisé en ce qu'**un grand nombre de reproductions de la scène (10) sont capturées au moyen du dispositif de capture d'images (30) par déplacement du dispositif de capture d'images (30), l'œil gauche (48) et/ou l'œil droit (50) du porteur de la monture de lunettes (18) regardant le dispositif de capture d'images (30) déplacé et des trajets de faisceaux de visualisation pour différentes directions de visualisation de l'œil gauche (48) et/ou de l'œil droit (50) du porteur de la monture de lunettes (18) à travers le verre de lunettes gauche (20) et/ou le verre de lunettes droit (22) de la monture de lunettes (18) étant calculés à partir du grand nombre de reproductions alors capturées de la scène (10), et une vergence locale étant déterminée pour chaque direction de visualisation k(x, y) du verre de lunettes gauche (20) et/ou du verre de lunettes droit (22) .

**6.** Procédé selon l'une des revendications 1 à 5, **caractérisé en ce qu'**un algorithme SLAM est utilisé pour calculer des paramètres intrinsèques de l'au moins un dispositif de capture d'images (30).

**7.** Procédé selon la revendication 6, **caractérisé par** des paramètres intrinsèques du groupe comprenant la distance focale, le centre d'image, des paramètres de cisaillement, des paramètres d'échelle, des paramètres de distorsion.

**8.** Procédé selon l'une des revendications 1 à 7, **caractérisé en ce qu'**un algorithme SLAM est utilisé pour calculer les coordonnées des points de structure (26) et/ou les positions de réception (32, 34, 36) de l'au moins un dispositif de capture d'images (30) dans le système de coordonnées (25) ; et/ou **en ce que** les coordonnées d'au moins une partie des points de structure (26) dans la scène (10) sont invariantes ; et/ou **en ce que** les coordonnées des points de structure (26) sont calculées par évaluation des décalages entre les reproductions des points de structure (26) dans la scène (10) à partir de différentes positions de réception (32, 34, 36) dans un système de coordonnées (25) .

**9.** Procédé selon l'une des revendications 1 à 8, **caractérisé en ce qu'**une évaluation des relations de voisinage entre les points de structure (26) dans la scène (10) permet de détecter un déplacement de points de structure (26) dans un repère (25) et les coordonnées de points de structure (26) déplacés dans une scène (10) ne sont pas prises en compte lors de la détermination d'une répartition de vergence k(x,y) pour au moins une portion du verre de lunettes droit (22) et/ou du verre de lunettes gauche (20).

**10.** Procédé de mesure de la répartition de vergence k(x,y) d'un verre de lunettes gauche et/ou d'un verre de lunettes droit (20, 22) dans une monture de lunettes (18), procédé dans lequel une vergence locale du verre de lunettes gauche et/ou du verre de lunettes droit (20, 22) est mesurée en différents endroits du verre gauche et/ou droit (20, 22) selon l'une des revendications 1 à 9.

**11.** Produit de programme d'ordinateur comprenant un programme d'ordinateur comprenant un code de programme destiné à réaliser toutes les étapes de procédé qui sont indiquées dans l'une des revendications 1 à 10, lorsque le programme d'ordinateur est chargé dans une unité informatique d'un dispositif selon la revendication 12 et/ou exécuté dans une unité informatique d'un dispositif selon la revendication 12.

**12.** Dispositif de mesure de la vergence locale d'un verre de lunettes gauche et/ou d'un verre de lunettes droit (20, 22) dans une monture de lunettes (18) à l'aide d'un dispositif de capture d'image (30) et d'une unité informatique (40) dans laquelle est chargé un programme informatique comprenant un code de programme destiné à réaliser toutes les étapes de procédé qui sont indiquées dans l'une des revendications 1 à 9, ou de mesure de la répartition de vergence d'un verre de lunettes gauche et/ou d'un verre de lunettes droit (20, 22) dans une monture de lunettes (18) à l'aide d'un dispositif de capture d'images (30) et d'une unité informatique (40) dans laquelle est chargé un programme informatique comprenant un code de programme destiné à réaliser toutes les étapes de procédé qui sont indiquées dans la revendication 10.

**13.** Dispositif selon la revendication 12 qui est conçu comme un Smartphone ou comme une tablette ou comme un appareil photo (28).

**14.** Support de données lisible par ordinateur sur lequel est mémorisé le produit de programme d'ordinateur selon la revendication 11.

**15.** Signal porteur de données qui transmet le programme d'ordinateur selon la revendication 11.

Fig.1

Fig.2

Fig.3

Fig.4

Fig5

Fig.6

EP 3 982 102 B1

Fig.7

Fig.8

Fig.9

Fig.10

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016207412 A1
- EP 2608109 A1
- US 20150362998 A1
- US 10019140 B1
- WO 2016076530 A1
- WO 2017134275 A1
- US 20150029323 A1
- EP 19170561 A
- EP 19170551
- EP 19170558
- EP 19170714